# EUROPEAN PATENT APPLICATION

(11) **EP 4 808 065 A1**
(43) Date of publication of application: **16.09.2026**
(21) Application number: 24899586.2
(22) Date of filing: 15.11.2024
(51) Int. Cl.: H04L 41/0896

(54) **BANDWIDTH ADJUSTMENT METHOD AND RELATED APPARATUS**

(30) Priority: 05.12.2023 CN 202311666973
(71) Applicant: Huawei Technologies Co., Ltd., Shenzhen, Guangdong 518129 (CN)
(72) Inventor: ZHOU, Yongbo, Shenzhen, Guangdong 518129 (CN); XU, Li, Shenzhen, Guangdong 518129 (CN); ZHANG, Yaocan, Shenzhen, Guangdong 518129 (CN); LI, Rixin, Shenzhen, Guangdong 518129 (CN); SUN, Peng, Shenzhen, Guangdong 518129 (CN); CHEN, Jingfeng, Shenzhen, Guangdong 518129 (CN)
(74) Representative: Goddar, Heinz J.
(86) International application number: PCT/CN2024/132174
(87) International publication number: WO 2025/118944

(57) **Abstract**

This application discloses a bandwidth adjustment method, and relates to the field of communication technologies, to dynamically adjust a bandwidth of a data bearer pipeline, and meet dynamically changed requirements in a service scenario. In the method, a negotiation mechanism for bandwidth adjustment is introduced to two communication apparatuses in a fine granularity metro transport network (Fine Granularity Metro Transport Network, fgMTN), and the two communication apparatuses negotiate about bandwidth adjustment in a handshake communication manner, simultaneously configure a new bandwidth for a data bearer pipeline at a specific time point, and during negotiation, specify a new slot allocation manner after the bandwidth of the data bearer pipeline is adjusted. This ensures that the data bearer pipeline can be normally used after the bandwidth is adjusted, to dynamically adjust the bandwidth of the data bearer pipeline, and meet the dynamically changed requirements in the service scenario.

## Description

This application claims priority to Chinese Patent Application No. 202311666973.4, filed with the China National Intellectual Property Administration on December 5, 2023 and entitled "BANDWIDTH ADJUSTMENT METHOD AND RELATED APPARATUS", which is incorporated herein by reference in its entirety.

### TECHNICAL FIELD

This application relates to the field of communication technologies, and in particular, to a bandwidth adjustment method and a related apparatus.

### BACKGROUND

Conventional dedicated network line bearer technologies are classified into two main directions: packet switching and circuit switching. Packet switching is to divide data to be transmitted into a plurality of groups based on a specific length, and each group is marked with an address identifier, so that a plurality of different data packets are transmitted on a shared physical line. Circuit switching is usually based on the time division multiplexing (time-division multiplexing, TDM) technology. Different data is interleaved in different time segments and transmitted along a same channel, so that each user can exclusively use bandwidth resources with good isolation.

A fine granularity metro transport network (Fine Granularity Metro Transport Network, fgMTN) is a dedicated network line architecture based on the circuit switching technology. In the fgMTN, a dedicated network line is divided into a plurality of coarse-granularity pipelines based on a bandwidth, and each coarse-granularity pipeline is used to bear data of one or more fine-granularity clients. Usually, a bandwidth of one coarse-granularity pipeline ranges from 1 gigabyte (Gigabyte, G) to 10 G.

Currently, in the fgMTN, the bandwidth of the coarse-granularity pipeline is usually configured by a network management system in a unified manner, and the bandwidth of the coarse-granularity pipeline cannot be dynamically adjusted.

### SUMMARY

This application provides a bandwidth adjustment method, to dynamically adjust a bandwidth of a data bearer pipeline, and meet dynamically changed requirements in a service scenario.

According to a first aspect, this application provides a bandwidth adjustment method. The method is applied to a first communication apparatus in an fgMTN. Specifically, the bandwidth adjustment method includes the following steps: First, the first communication apparatus sends first request information to a second communication apparatus, where the first request information indicates a slot allocation manner after a bandwidth of the first bearer pipeline is adjusted. The first bearer pipeline is a data bearer pipeline in the fgMTN. The slot allocation manner after the bandwidth of the first bearer pipeline is adjusted indicates a correspondence between a fine-granularity client that uses the first bearer pipeline and a slot provided after the bandwidth of the first bearer pipeline is adjusted, that is, indicate slots for transmitting data of the corresponding fine-granularity client. In addition, because the bandwidth of the first bearer pipeline is directly proportional to a total quantity of slots, when the first request information indicates the slot allocation manner after the bandwidth of the first bearer pipeline is adjusted, the adjusted bandwidth of the first bearer pipeline can also be indicated (that is, the adjusted bandwidth of the first bearer pipeline can be determined based on the total quantity of slots in the slot allocation manner).

Then, when the second communication apparatus determines that the slot allocation manner indicated by the first request information is supported, the first communication apparatus receives first response information sent by the second communication apparatus, where the first response information indicates that the second communication apparatus supports the slot allocation manner.

Then, the first communication apparatus sends second request information to the second communication apparatus, where the second request information indicates that the second communication apparatus causes the slot allocation manner to take effect at a preset time point. Therefore, the first communication apparatus may send the data to the second communication apparatus at the preset time point based on the slot allocation manner obtained through negotiation between the first communication apparatus and the second communication apparatus and the adjusted bandwidth of the first bearer pipeline. For example, when the bandwidth of the first bearer pipeline is increased, the first communication apparatus also needs to increase a data sending rate when sending the data to the second communication apparatus in a new slot allocation manner, to ensure that the data is sent to the second communication apparatus based on the adjusted bandwidth of the first bearer pipeline. The second communication apparatus receives the data from the first communication apparatus at the preset time point based on the slot allocation manner obtained through negotiation between the first communication apparatus and the second communication apparatus and the adjusted bandwidth of the first bearer pipeline, to ensure lossless data transmission through the first bearer pipeline between the first communication apparatus and the second communication apparatus, and avoid a data packet loss caused by slot misalignment.

In this solution, a negotiation mechanism for bandwidth adjustment is introduced to the two communication apparatuses in the fgMTN, and the two communication apparatuses negotiate about bandwidth adjustment in a handshake communication manner, simultaneously configure a new bandwidth for a data bearer pipeline at a specific time point, and during negotiation, specify a new slot allocation manner after the bandwidth of the data bearer pipeline is adjusted. This ensures that the data bearer pipeline can be normally used after the bandwidth is adjusted, to dynamically adjust the bandwidth of the data bearer pipeline, and meet dynamically changed requirements in a service scenario.

In a possible implementation, the first bearer pipeline is a data bearer pipeline in a dedicated network line of the fgMTN. The dedicated network line includes a plurality of data bearer pipelines, and the first bearer pipeline is used to bear service data of one or more fine-granularity clients. In other words, the first bearer pipeline is actually one of a plurality of coarse-granularity pipelines obtained by dividing the dedicated network line, and can be used to bear service data of different fine-granularity clients.

In this solution, the bandwidth of the data bearer pipeline in the dedicated network line is dynamically adjusted, so that the bandwidth of the data bearer pipeline can dynamically change with a bandwidth requirement of the client. This meets the dynamically changed requirements in the service scenario.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0. Specifically, when sending a frame to the second communication apparatus through the first bearer pipeline, the first communication apparatus includes the fgOMFI in an OH field of each frame, and values of fgOMFIs are continuously polled in a specific range as frames increase (that is, the first communication apparatus inserts, in turn, values of fgOMFIs in a specific range into the frames). Therefore, the first communication apparatus may use, as a boundary node, the time point at which the fgOMFI in the frame borne by the first bearer pipeline is 0, to trigger the two communication apparatuses to simultaneously cause the slot allocation manner to take effect.

Alternatively, the preset time point is a start time point of a data plane slot after the first communication apparatus sends the second request information. One round of data plane slots are slots corresponding to a data plane in a complete slot period. In other words, the preset time point may be actually a time point starting from an N^{th} slot period after the first communication apparatus sends the second request information, where N is an integer greater than or equal to 1. For example, the preset time point is a start time point of a next slot period after the first communication apparatus sends the second request information. Optionally, in some embodiments, the preset time point may alternatively be a time point at which a start point of a data frame and a start point of a slot period overlap.

In this solution, the slot allocation manner obtained through negotiation is configured to take effect at the boundary moment of the slot period, so that both the first communication apparatus and the second communication apparatus can trigger the new slot allocation manner to take effect at a same time node. This ensures that the first communication apparatus and the second communication apparatus can subsequently transmit data based on the new slot allocation manner.

In a possible implementation, after the bandwidth of the first bearer pipeline is adjusted, a fine-granularity client that uses the first bearer pipeline changes. The slot allocation manner after the bandwidth of the first bearer pipeline is adjusted indicates a correspondence between the changed fine-granularity client and a slot corresponding to the first bearer pipeline.

In this solution, in a process of adjusting the bandwidth of the data bearer pipeline, a change status of the fine-granularity client in the data bearer pipeline is also reflected in the slot allocation manner. This can reduce a step of additionally negotiating about the change status of the fine-granularity client in the data bearer pipeline between the communication apparatuses, and reduce message overheads between the communication apparatuses.

In a possible implementation, after the bandwidth of the first bearer pipeline is adjusted, the fine-granularity client that uses the first bearer pipeline does not change, but a quantity of slots corresponding to a target fine-granularity client that uses the first bearer pipeline changes. The target fine-granularity clients may be some or all fine-granularity clients that use the first bearer pipeline. Changing of the quantity of slots corresponding to the target fine-granularity client indicates that a bandwidth corresponding to the target fine-granularity client changes.

In this solution, in a process of adjusting the bandwidth of the data bearer pipeline, a bandwidth change status of the fine-granularity client in the data bearer pipeline is also reflected in the slot allocation manner. This can reduce a step of additionally negotiating about bandwidth adjustment of the fine-granularity client in the data bearer pipeline between the communication apparatuses, and reduce message overheads between the communication apparatuses.

In a possible implementation, the first request information is further used to request the second communication apparatus to adjust the bandwidth of the first bearer pipeline.

In other words, the first request information also indicates to request the second communication apparatus to adjust the bandwidth of the first bearer pipeline and indicates a slot allocation manner after the bandwidth of the first bearer pipeline is adjusted. Therefore, after receiving the first request information, when identifying that the first request information indicates to request to adjust the bandwidth of the first bearer pipeline, the second communication apparatus can determine that the slot allocation manner indicated in the first request information is actually a slot allocation manner corresponding to the adjusted bandwidth of the first bearer pipeline.

In a possible implementation, the first request information indicates, via a target bit in the overhead (overhead, OH) field of the frame, to request the second communication apparatus to adjust the bandwidth of the first bearer pipeline. The target bit is, for example, an existing bit or a reserved bit in the overhead field of the frame.

In this solution, the target bit in the OH field of the frame indicates to request the communication apparatus to adjust the bandwidth of the data bearer pipeline, so that the same request information can simultaneously indicate the communication apparatus to adjust the bandwidth of the data bearer pipeline and the slot allocation manner after the bandwidth is adjusted. This improves communication efficiency between the communication apparatuses.

In a possible implementation, before the first communication apparatus sends the first request information to the second communication apparatus, the method further includes: The first communication apparatus sends third request information to the second communication apparatus, where the third request information is used to request the second communication apparatus to adjust the bandwidth of the first bearer pipeline; and receives third response information sent by the second communication apparatus, where the third response information indicates that the second communication apparatus supports adjustment of the bandwidth of the first bearer pipeline.

In other words, when the first communication apparatus needs to adjust the bandwidth of the first bearer pipeline, the first communication apparatus first sends one piece of request information to the second communication apparatus to request the second communication apparatus to cooperate in adjusting the bandwidth of the first bearer pipeline, to determine whether the second communication apparatus can support adjustment of the bandwidth of the first bearer pipeline.

In a possible implementation, before the first communication apparatus sends the first request information to the second communication apparatus, the first communication apparatus generates a slot table of an OH plane, where the slot table of the OH plane indicates the slot corresponding to the first bearer pipeline and OH information that needs to be transmitted in the slot corresponding to the first bearer pipeline, and the OH information is information in the OH field of the frame.

Then, the first communication apparatus transfers the OH information to the data plane based on the slot table of the OH plane, to enable the data plane to send the first request information or the second request information in the slot corresponding to the first bearer pipeline. In other words, when the first communication apparatus sends the frame to the second communication apparatus on the data plane, the first communication apparatus transfers the OH information to the data plane based on the slot table of the OH plane, so that the data plane can organize the obtained OH information into content in the OH field of the frame for sending in the slot corresponding to the first bearer pipeline. Therefore, the first request information, the second request information, or the third request information is sent.

In this solution, which OH information (namely, content in the first request information, the second request information, and the third request information) that needs to be transmitted in which slots (namely, the slot corresponding to the first bearer pipeline) can be determined based on the slot table of the OH plane, to ensure that the slot table of the data plane does not need to be changed, and ensure that service data of the fine-granularity client can be normally sent.

In a possible implementation, the first communication apparatus generates a secondary slot table of the data plane based on the slot allocation manner, where the secondary slot table of the data plane indicates distribution of slots corresponding to the fine-granularity client after the bandwidth of the first bearer pipeline is adjusted; and switches the secondary slot table of the data plane to a primary slot table at the preset time point.

In this solution, the secondary slot table of the data plane is generated in advance, and the secondary slot table that is generated in advance is switched to the primary slot table at the preset time point, to improve efficiency of slot table switching. This can ensure that the service data is normally transmitted in the old slot allocation manner before the preset time point, and the service data is transmitted in the new slot allocation manner after the preset time point, to ensure that normal transmission of the service data is not affected in the bandwidth adjustment process.

According to a second aspect, this application provides a bandwidth adjustment method. The method is applied to a second communication apparatus in an fgMTN, and includes: The second communication apparatus receives first request information sent by a first communication apparatus, where the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN; sends first response information to the first communication apparatus, where the first response information indicates that the second communication apparatus supports the slot allocation manner; and receives second request information sent by the first communication apparatus, where the second request information indicates that the second communication apparatus causes the slot allocation manner to take effect at a preset time point.

In a possible implementation, the first bearer pipeline is a data bearer pipeline in a dedicated network line of the fgMTN, the dedicated network line includes a plurality of data bearer pipelines, and the first bearer pipeline is used to bear service data of one or more fine-granularity clients.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0; or the preset time point is a start time point of a next round of data plane slots after the first communication apparatus sends the second request information.

In a possible implementation, after the bandwidth of the first bearer pipeline is adjusted, the fine-granularity client that uses the first bearer pipeline changes. The slot allocation manner indicates a correspondence between the changed fine-granularity client and a slot corresponding to the first bearer pipeline.

In a possible implementation, after the bandwidth of the first bearer pipeline is adjusted, a quantity of slots corresponding to a target fine-granularity client that uses the first bearer pipeline changes.

In a possible implementation, the first request information is further used to request the second communication apparatus to adjust the bandwidth of the first bearer pipeline.

In a possible implementation, the first request information indicates, via a target bit in an OH field of the frame, to request the second communication apparatus to adjust the bandwidth of the first bearer pipeline.

In a possible implementation, before the second communication apparatus receives the first request information sent by the first communication apparatus, the second communication apparatus receives third request information sent by the first communication apparatus, where the third request information is used to request the second communication apparatus to adjust the bandwidth of the first bearer pipeline; and sends third response information to the first communication apparatus, where the third response information indicates that the second communication apparatus supports adjustment of the bandwidth of the first bearer pipeline.

According to a third aspect, this application provides a communication apparatus. The apparatus is a first communication apparatus in an fgMTN, and the apparatus includes: a sending module, configured to send first request information to a second communication apparatus, where the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN; and a receiving module, configured to receive first response information sent by the second communication apparatus, where the first response information indicates that the second communication apparatus supports the slot allocation manner. The sending module is further configured to send second request information to the second communication apparatus, where the second request information indicates that the second communication apparatus causes the slot allocation manner to take effect at a preset time point.

In a possible implementation, the first bearer pipeline is a data bearer pipeline in a dedicated network line of the fgMTN, the dedicated network line includes a plurality of data bearer pipelines, and the first bearer pipeline is used to bear service data of one or more fine-granularity clients.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0.

Alternatively, the preset time point is a start time point of a data plane slot after the first communication apparatus sends the second request information.

In a possible implementation, after the bandwidth of the first bearer pipeline is adjusted, the fine-granularity client that uses the first bearer pipeline changes. The slot allocation manner indicates a correspondence between the changed fine-granularity client and a slot corresponding to the first bearer pipeline.

In a possible implementation, after the bandwidth of the first bearer pipeline is adjusted, a quantity of slots corresponding to a target fine-granularity client that uses the first bearer pipeline changes.

In a possible implementation, the first request information is further used to request the second communication apparatus to adjust the bandwidth of the first bearer pipeline.

In a possible implementation, the first request information indicates, via a target bit in an overhead OH field of the frame, to request the second communication apparatus to adjust the bandwidth of the first bearer pipeline.

In a possible implementation, before sending the first request information to the second communication apparatus, the sending module is further configured to send third request information to the second communication apparatus, where the third request information is used to request the second communication apparatus to adjust the bandwidth of the first bearer pipeline. The receiving module is further configured to receive third response information sent by the second communication apparatus, where the third response information indicates that the second communication apparatus supports adjustment of the bandwidth of the first bearer pipeline.

In a possible implementation, the apparatus further includes a processing module.

The processing module is configured to generate a slot table of an OH plane, where the slot table of the OH plane indicates the slot corresponding to the first bearer pipeline and OH information that needs to be transmitted in the slot corresponding to the first bearer pipeline, and the OH information is information in the OH field of the frame.

The processing module is further configured to transfer the OH information to the data plane based on the slot table of the OH plane, to enable the data plane to send the first request information or the second request information in the slot corresponding to the first bearer pipeline.

In a possible implementation, the apparatus further includes the processing module.

The processing module is configured to generate a secondary slot table of the data plane, where the secondary slot table of the data plane indicates distribution of slots corresponding to the fine-granularity client after the bandwidth of the first bearer pipeline is adjusted.

The processing module is further configured to switch the secondary slot table of the data plane to a primary slot table at the preset time point.

According to a fourth aspect, this application provides a communication apparatus. The apparatus is a second communication apparatus in an fgMTN, and the apparatus includes: a receiving module, configured to receive first request information sent by a first communication apparatus, where the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN; and a sending module, configured to send first response information to the first communication apparatus, where the first response information indicates that the second communication apparatus supports the slot allocation manner. The receiving module is further configured to receive second request information sent by the first communication apparatus, where the second request information indicates that the second communication apparatus causes the slot allocation manner to take effect at a preset time point.

In a possible implementation, the first bearer pipeline is a data bearer pipeline in a dedicated network line of the fgMTN, the dedicated network line includes a plurality of data bearer pipelines, and the first bearer pipeline is used to bear service data of one or more fine-granularity clients.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0.

Alternatively, the preset time point is a start time point of a data plane slot after the first communication apparatus sends the second request information.

In a possible implementation, after the bandwidth of the first bearer pipeline is adjusted, the fine-granularity client that uses the first bearer pipeline changes. The slot allocation manner indicates a correspondence between the changed fine-granularity client and a slot corresponding to the first bearer pipeline.

In a possible implementation, after the bandwidth of the first bearer pipeline is adjusted, a quantity of slots corresponding to a target fine-granularity client that uses the first bearer pipeline changes.

In a possible implementation, the first request information is further used to request the second communication apparatus to adjust the bandwidth of the first bearer pipeline.

In a possible implementation, the first request information indicates, via a target bit in an OH field of the frame, to request the second communication apparatus to adjust the bandwidth of the first bearer pipeline.

In a possible implementation, before receiving the first request information sent by the first communication apparatus, the receiving module is further configured to receive third request information sent by the first communication apparatus, where the third request information is used to request the second communication apparatus to adjust the bandwidth of the first bearer pipeline. The sending module is further configured to send third response information to the first communication apparatus, where the third response information indicates that the second communication apparatus supports adjustment of the bandwidth of the first bearer pipeline.

According to a fifth aspect, this application provides a communication apparatus, including a processor and a memory. The memory is configured to store program code, and the processor is configured to invoke the program code in the memory, to enable the communication apparatus to perform the method in any one of the implementations of the first aspect or the second aspect.

According to a sixth aspect, this application provides a computer-readable storage medium, storing instructions. When the instructions are run on a computer, the computer is enabled to perform the method in any one of the implementations of the first aspect.

According to a seventh aspect, this application provides a computer program product. When the computer program product runs on a computer, the computer is enabled to perform the method in any one of the implementations of the first aspect.

According to an eighth aspect, this application provides a chip, including one or more processors. Some or all of the processors are configured to read and execute computer instructions stored in a memory, to perform the method in any possible implementation of any one of the foregoing aspects. Optionally, the chip further includes the memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input/output interface or a bus interface. The method provided in this application is implemented by one chip, or is implemented by a plurality of chips in cooperation.

The solutions provided in the second aspect to the eighth aspect are used for implementing or cooperatively implementing the method provided in the first aspect, and therefore can achieve same or corresponding beneficial effect as the first aspect. Details are not described herein again.

### BRIEF DESCRIPTION OF DRAWINGS

FIG. 1 is a diagram of an application scenario according to an embodiment of this application;
FIG. 2 is a diagram of data transmission between communication apparatuses according to an embodiment of this application;
FIG. 3 is a diagram of possible division into data bearer pipelines according to an embodiment of this application;
FIG. 4 is a schematic flowchart of a bandwidth adjustment method according to an embodiment of this application;
FIG. 5 is a diagram of a format of a frame according to an embodiment of this application;
FIG. 6 is a diagram of a format of an OH field according to an embodiment of this application;
FIG. 7A and FIG. 7B are a schematic flowchart in which communication apparatuses negotiate about decreasing a bandwidth according to an embodiment of this application;
FIG. 8A and FIG. 8B are a schematic flowchart in which communication apparatuses negotiate about increasing a bandwidth according to an embodiment of this application;
FIG. 9 is a diagram of a change of a slot allocation manner before and after a bandwidth of a data bearer pipeline is increased according to an embodiment of this application;
FIG. 10 is a diagram of a change of a slot allocation manner before and after a bandwidth of a data bearer pipeline is decreased according to an embodiment of this application;
FIG. 11 is another diagram of a change of a slot allocation manner before and after a bandwidth of a data bearer pipeline is decreased according to an embodiment of this application;
FIG. 12 is a diagram of interaction between an OH plane and a data plane according to an embodiment of this application;
FIG. 13 is a diagram of a format of a bearer pipeline mapping table according to an embodiment of this application;
FIG. 14 shows a slot table of a single bearer pipeline according to an embodiment of this application;
FIG. 15 is a diagram of a slot table of a data plane according to an embodiment of this application;
FIG. 16 is a diagram of a slot table of an OH plane according to an embodiment of this application;
FIG. 17 is a diagram of a structure of a communication apparatus according to an embodiment of this application;
FIG. 18 is a diagram of a structure of a communication apparatus according to an embodiment of this application; and
FIG. 19 is a diagram of a structure of a network device according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and the like are intended to distinguish between similar objects but do not necessarily indicate a specific order or sequence. In embodiments of this application, the term "at least one" means one or more, and "a plurality of" means two or more.

The specific term "example" herein means "used as an example, embodiment or illustration". Any embodiment described as "example" is not necessarily explained as being superior or better than other embodiments.

To help a person skilled in the art better understand the technical solutions of this application, some related technologies and technical terms in the technical solutions of this application are first briefly described.

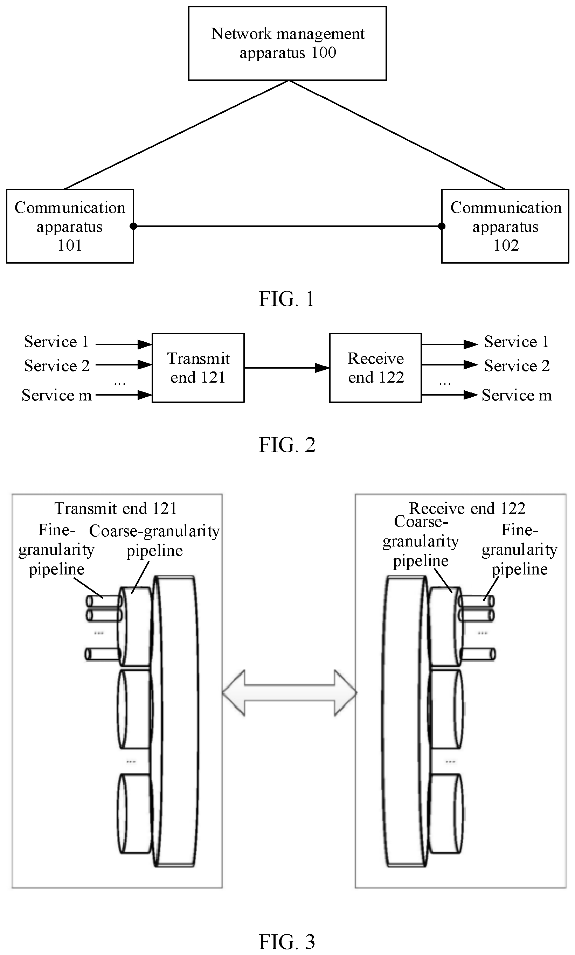

FIG. 1 illustrates a diagram of an application scenario according to an embodiment of this application. The following describes the application scenario of embodiments of this application with reference to the accompanying drawing.

As shown in FIG. 1, a network management apparatus 100, a communication apparatus 101, and a communication apparatus 102 are included. The communication apparatus 101 and the communication apparatus 102 may be network devices, or may be chips disposed inside a network device. The network device includes but is not limited to: a core router, an edge router, an optical transport network (optical transport network, OTN) transmission device, an OTN optical service unit (optical service unit, OSU), and a box-shaped or frame-shaped switch device, for a specific scenario, based on an Internet protocol radio access network (Internet protocol radio access network, IP RAN) and a packet transport network (packet transport network, PTN).

As shown in FIG. 1, the network management apparatus 100 may be configured to deliver some control or management information to the communication apparatus 101 or the communication apparatus 102, for example, deliver some information about a change of a fine-granularity client changes or a bandwidth of a fine-granularity client. The communication apparatus 101 and the communication apparatus 102 may transmit data to each other. The communication apparatus 101 and the communication apparatus 102 may each include a sending module and a receiving module. In other words, either the communication apparatus 101 or the communication apparatus 102 may be used as a transmit end 121 in FIG. 2, or may be used as a receive end 122 in FIG. 2 in some cases.

FIG. 2 is a diagram of data transmission between communication apparatuses according to an embodiment of this application. As shown in FIG. 2, the solutions in embodiments of this application may be applied between the transmit end 121 and the receive end 122. In this embodiment of this application, one or more services (for example, a service 1, a service 2, ..., and a service m in FIG. 2) may be multiplexed at the transmit end, data obtained through multiplexing is transmitted to the receive end 122, and the receive end 122 demultiplexes the data, to restore each service. In this embodiment of this application, the service between the transmit end 121 and the receive end 122 may be dynamically adjusted, for example, a service is added, a service is deleted, a bandwidth of the service is increased, or a bandwidth of the service is decreased. In this embodiment of this application, an interface at the transmit end and an interface at the receive end may be fgMTN interfaces, OTN interfaces, Ethernet interfaces, or the like; or pipelines obtained by dividing these interfaces.

FIG. 3 is a diagram of possible division into data bearer pipelines according to an embodiment of this application. As shown in FIG. 3, the interface at the transmit end 121 and the interface at the receive end 122 may be divided into pipelines based on FIG. 2. In embodiments of this application, two nouns are defined: a coarse-granularity pipeline and a fine-granularity pipeline. The coarse-granularity pipeline and the fine-granularity pipeline are relative. One coarse-granularity pipeline may be divided into one or more fine-granularity pipelines, and a bandwidth of the coarse-granularity pipeline is usually greater than or equal to a bandwidth of the fine-granularity pipeline. Specifically, a coarse-granularity pipeline between the transmit end 121 and the receive end 122 may be divided into a plurality of fine-granularity pipelines, and each fine-granularity pipeline may be used to bear service data. Usually, the fine-granularity pipeline may be understood as a logic pipeline, one fine-granularity pipeline is used to bear service data of one fine-granularity user (for example, one or more services of one fine-granularity user), and the coarse-granularity pipeline may be used to bear service data of the plurality of fine-granularity users.

For example, a bandwidth of the coarse-granularity pipeline may range from 1 to 10 gigabits per second (gigabit per second, Gbps) or may be another bandwidth value. In addition, because a minimum bandwidth of the fine-granularity service is usually 10 megabits per second (million bit per second, Mbps), a 5 Gbps coarse-granularity pipeline can provide 480 fine-granularity slots to bear a fine-granularity service. Similarly, a 1 Gbps coarse-granularity pipeline can provide 96 fine-granularity slots to bear a fine-granularity service.

In actual application scenarios, fine-granularity clients rent some bandwidths of a dedicated network line. Based on the bandwidths leased by the fine-granularity clients, a unique corresponding coarse-granularity pipeline may be determined for each fine-granularity client, so that the coarse-granularity pipeline is used to bear service data of each fine-granularity client. Usually, one coarse-granularity pipeline can be used to bear service data of a plurality of fine-granularity clients. In addition, to ensure resource utilization of the coarse-granularity pipeline, the bandwidth of the coarse-granularity pipeline is usually equal to a sum of the bandwidths rented by the plurality of fine-granularity clients borne by the coarse-granularity pipeline. However, as the service of the client dynamically changes, the client that rents the dedicated network line may change, and the bandwidth of the dedicated network line rented by the client may also change. Consequently, it is difficult to match the bandwidth of the coarse-granularity pipeline with the sum of the bandwidths rented by the fine-granularity clients borne by the coarse-granularity pipeline.

In view of this, embodiments of this application provide a bandwidth adjustment method. A negotiation mechanism for bandwidth adjustment is introduced to two communication apparatuses in an fgMTN, and the two communication apparatuses negotiate about bandwidth adjustment in a handshake communication manner, simultaneously configure a new bandwidth for a data bearer pipeline (namely, the foregoing coarse-granularity pipeline) at a specific time point, and during negotiation, specify a new slot allocation manner after the bandwidth of the data bearer pipeline is adjusted. This ensures that the data bearer pipeline can be normally used after the bandwidth is adjusted, to dynamically adjust the bandwidth of the data bearer pipeline, and meet dynamically changed requirements in a service scenario.

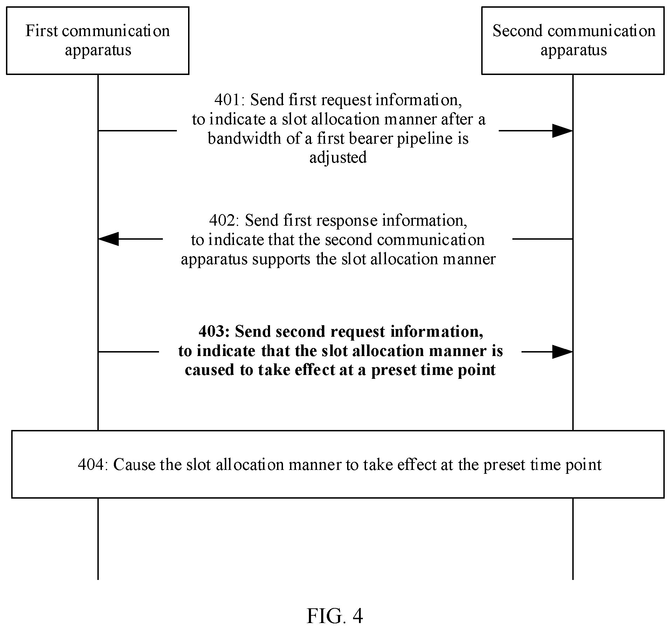

FIG. 4 is a schematic flowchart of a bandwidth adjustment method according to an embodiment of this application. As shown in FIG. 4, the bandwidth adjustment method includes step 401 to step 404 in the following.

Step 401: A first communication apparatus sends first request information to a second communication apparatus, where the first request information indicates a slot allocation manner after a bandwidth of a first bearer pipeline is adjusted, and the slot allocation manner indicates a correspondence between a fine-granularity client that uses the first bearer pipeline and a slot provided after the bandwidth of the first bearer pipeline is adjusted.

In this embodiment, when the first communication apparatus expects to adjust the bandwidth of the first bearer pipeline between the first communication apparatus and the second communication apparatus, the first communication apparatus sends the first request information to the second communication apparatus, to negotiate with the second communication apparatus about how to adjust the bandwidth of the first bearer pipeline. For example, the first communication apparatus is a transmit end of service data, and the second communication apparatus is a receive end of the service data, that is, the first communication apparatus transmits the service data to the second communication apparatus through the first bearer pipeline.

Optionally, the first bearer pipeline is a data bearer pipeline in a dedicated network line of an fgMTN. The dedicated network line includes a plurality of data bearer pipelines, and the first bearer pipeline is used to bear service data of one or more fine-granularity clients. In other words, the first bearer pipeline is the foregoing coarse-granularity pipeline, and is used to bear fine-granularity service data. For example, the bandwidth of the first bearer pipeline may range from 1 Gbps to 10 Gbps, or may be another bandwidth value like 1 Gbps or 5 Gbps. In this embodiment, the bandwidth of the first bearer pipeline may change at a granularity of 1 Gbps, for example, change from 1 Gbps to a bandwidth value like 2 Gbps, 5 Gbps, or 10 Gbps, or change from 5 Gbps to a bandwidth value like 2 Gbps or 1 Gbps. Alternatively, the bandwidth of the first bearer pipeline may change at a granularity of another bandwidth value. For example, when changing at a granularity of 5 Gbps, the bandwidth is increased from 5 Gbps to 10 Gbps. In conclusion, neither the granularity at which the bandwidth of the first bearer pipeline changes nor a change range of the first bearer pipeline is limited in embodiments. For ease of description, in this embodiment, an example in which the bandwidth of the first bearer pipeline changes from 1 Gbps to 5 Gbps and from 5 Gbps to 1 Gbps is used below for description.

Because a bandwidth of a fine-granularity service borne by the first bearer pipeline is usually fixed, when the bandwidth of the first bearer pipeline is fixed, a quantity of fine-granularity slots provided by the first bearer pipeline is also fixed. For example, when the bandwidth of the first bearer pipeline is 5 Gbps, and a bandwidth of a fine-granularity pipeline is 10 Mbps, the first bearer pipeline can provide 480 fine-granularity slots to bear the fine-granularity service. When the bandwidth of the first bearer pipeline is 1 Gbps, and the bandwidth of the fine-granularity pipeline is 10 Mbps, the first bearer pipeline can provide 96 fine-granularity slots to bear the fine-granularity service. In this case, after the bandwidth of the first bearer pipeline is adjusted, the quantity of fine-granularity slots that can be provided by the first bearer pipeline changes. Correspondingly, when the quantity of fine-granularity slots that can be provided by the first bearer pipeline changes, a correspondence between the fine-granularity slot provided by the first bearer pipeline whose bandwidth is adjusted and the fine-granularity client usually also changes. Therefore, the first communication apparatus may indicate, via the first request information, the slot allocation manner after the bandwidth of the first bearer pipeline is adjusted, so that the second communication apparatus can subsequently receive, based on the new slot allocation manner, data transmitted by the first communication apparatus.

It should be noted that this specification is described by using an example in which the bandwidth of the fine-granularity pipeline is 10 Mbps, so that quantities of slots corresponding to the first bearer pipeline in various bandwidths are determined (for example, when the bandwidth of the first bearer pipeline is 5 Gbps, 480 slots can be provided). During actual application, the bandwidth of the fine-granularity pipeline may alternatively be another value, for example, 5 Mbps or 20 Mbps. This is not specifically limited in this embodiment.

For example, it is assumed that the bandwidth of the first bearer pipeline is 1 Gbps before adjustment, and 96 slots provided by the first bearer pipeline are respectively allocated to a fine-granularity client 1 and a fine-granularity client 2. The fine-granularity client 1 corresponds to 32 slots in the 96 slots, and a sequence number of the slot corresponding to the fine-granularity client 1 is an integer multiple of 3 (that is, the fine-granularity client corresponds to a slot 0, a slot 3, a slot 6, ..., and a slot 93). The fine-granularity client 2 corresponds to the other 64 slots in the 96 slots, that is, the fine-granularity client corresponds to a slot 1, a slot 2, a slot 4, a slot 5, ..., and a slot 95.

In this case, after the bandwidth of the first bearer pipeline is adjusted to 5 Gbps, the first bearer pipeline is adjusted from providing 96 slots to providing 480 slots. When the 480 slots provided by the first bearer pipeline whose bandwidth is adjusted are still allocated to the fine-granularity client 1 and the fine-granularity client 2, a correspondence between the 480 slots provided by the first bearer pipeline whose bandwidth is adjusted and the fine-granularity client 1 and the fine-granularity client 2 also changes. For example, the fine-granularity client 1 still corresponds to 32 slots in the 480 slots, a sequence number of the slot corresponding to the fine-granularity client 1 may be an integer multiple of 15 (that is, the fine-granularity client corresponds to a slot 0, a slot 15, a slot 30, ..., and a slot 465), and the fine-granularity client 2 corresponds to the other 448 slots in the 480 slots, that is, the fine-granularity client corresponds to a slot 1, a slot 2, ..., a slot 14, ..., and a slot 479.

It should be noted that the bandwidth of the first bearer pipeline is directly proportional to the slot provided by the first bearer pipeline. Therefore, when the slot allocation manner of the first bearer pipeline is indicated, the bandwidth of the first bearer pipeline can also be determined based on the quantity of slots included in the slot allocation manner. For example, if the slot allocation manner indicated by the first request information is an allocation manner of 480 slots, it may be determined that the adjusted bandwidth of the first bearer pipeline is 5 Gbps. If the slot allocation manner indicated by the first request information is an allocation manner of 96 slots, it may be determined that the adjusted bandwidth of the first bearer pipeline is 1 Gbps.

Step 402: The second communication apparatus sends first response information to the first communication apparatus, where the first response information indicates that the second communication apparatus supports the slot allocation manner.

After the second communication apparatus receives the first request information sent by the first communication apparatus, if the second communication apparatus can identify content indicated by the first request information sent by the first communication apparatus, and the second communication apparatus can support the slot allocation manner after the bandwidth of the first bearer pipeline is adjusted, the second communication apparatus may send the first response information to the first communication apparatus, to indicate that the second communication apparatus supports the slot allocation manner indicated by the first communication apparatus.

Step 403: The first communication apparatus sends second request information to the second communication apparatus, where the second request information indicates that the second communication apparatus causes the slot allocation manner to take effect at a preset time point.

After receiving the first response information returned by the second communication apparatus, the first communication apparatus can determine that the second communication apparatus supports adjustment of the bandwidth of the first bearer pipeline and the new slot allocation manner after the bandwidth is adjusted. Therefore, to enable the first communication apparatus and the second communication apparatus to simultaneously implement data transmission in the new slot allocation manner, the first communication apparatus sends the second request information to the second communication apparatus, to instruct the second communication apparatus to cause the slot allocation manner to take effect at the preset time point.

Step 404: The first communication apparatus and the second communication apparatus cause the slot allocation manner to take effect at the preset time point.

Specifically, the first communication apparatus and the second communication apparatus may configure slot tables to take effect at the preset time point, where the slot tables are generated based on the slot allocation manner obtained through negotiation on a data plane. A slot table configured by the first communication apparatus indicates the first communication apparatus to send data, and a slot table configured by the second communication apparatus indicates the second communication apparatus to receive the data. Therefore, the first communication apparatus sends the data to the second communication apparatus at the preset time point based on the slot allocation manner obtained through negotiation between the first communication apparatus and the second communication apparatus and the adjusted bandwidth of the first bearer pipeline. For example, when the bandwidth of the first bearer pipeline is increased, the first communication apparatus also needs to increase a data sending rate when sending the data to the second communication apparatus in the new slot allocation manner, to ensure that the data is sent to the second communication apparatus based on the adjusted bandwidth of the first bearer pipeline. The second communication apparatus receives the data from the first communication apparatus at the preset time point based on the slot allocation manner obtained through negotiation between the first communication apparatus and the second communication apparatus and the adjusted bandwidth of the first bearer pipeline, to ensure lossless data transmission through the first bearer pipeline between the first communication apparatus and the second communication apparatus, and avoid a data packet loss caused by slot misalignment. For example, when the bandwidth of the first bearer pipeline is increased, the second communication apparatus also needs to increase a data receiving rate when receiving the data in the new slot allocation manner, to ensure that the data is received based on the adjusted bandwidth of the first bearer pipeline.

The foregoing embodiment describes the first communication apparatus negotiates with the second communication apparatus about the slot allocation manner after the bandwidth of the bearer pipeline is adjusted. To help the second communication apparatus accurately identify that the first request information sent by the first communication apparatus indicates the slot allocation manner after the bandwidth of the bearer pipeline is adjusted, this embodiment provides a plurality of implementations.

In a possible implementation, the first request information sent by the first communication apparatus is further used to request the second communication apparatus to adjust the bandwidth of the first bearer pipeline.

In other words, the first request information also indicates to request the second communication apparatus to adjust the bandwidth of the first bearer pipeline and indicates the slot allocation manner after the bandwidth of the first bearer pipeline is adjusted. Therefore, after receiving the first request information, when identifying that the first request information indicates to request to adjust the bandwidth of the first bearer pipeline, the second communication apparatus can determine that the slot allocation manner indicated in the first request information is actually a slot allocation manner corresponding to the adjusted bandwidth of the first bearer pipeline. For example, the first request information indicates, via a target bit in the overhead (overhead, OH) field of the frame, to request the second communication apparatus to adjust the bandwidth of the first bearer pipeline. The target bit is, for example, an existing bit or a reserved bit in the overhead field of the frame. A value of the target bit in the OH field in the frame sent by the first communication apparatus to the second communication apparatus is set to 1, to indicate to currently request the second communication apparatus to adjust the bandwidth of the first bearer pipeline.

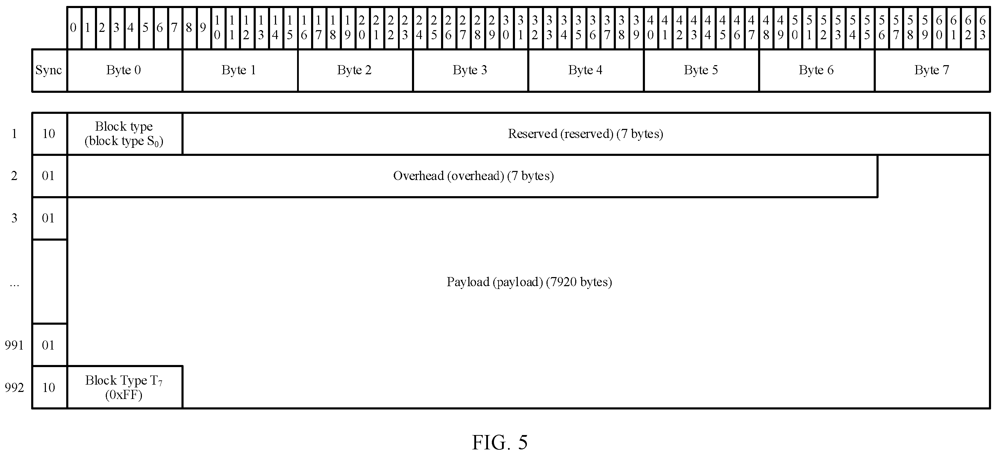

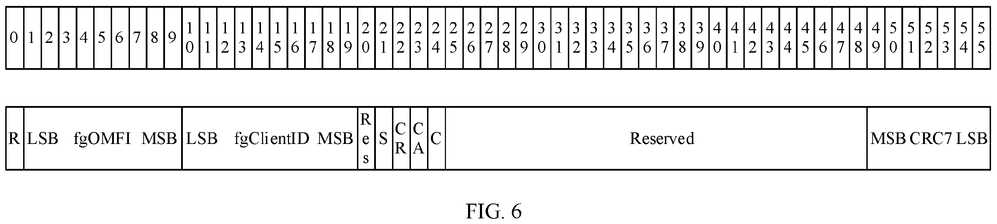

FIG. 5 is a diagram of a format of a frame according to an embodiment of this application. FIG. 6 is a diagram of a format of an OH field according to an embodiment of this application. In the fgMTN, the format of the frame sent by the first communication apparatus to the second communication apparatus is shown in FIG. 5. The frame includes a plurality of fields: a block type S0 (Block type S0) field, a reserved field, an OH field, a payload (payload) field, and a block type T7 field. The OH field may be used to bear the content of the first request information mentioned in this embodiment, and the payload field is used to bear the service data of the fine-granularity client.

As shown in FIG. 6, the OH field in the frame may be defined as a plurality of parts, including bits such as a fine granularity overhead multi-frame indication (Fine Granularity Overhead Multi frame indication, fgOMFI), a fine granularity client identifier (Fine Granularity Overhead Client Identity Document, fgClientID), a reserved (Reserved, Res) bit, an expansion notification (expansion notification, S), an adjustment request (adjustment request, CR), an adjustment acknowledgment (adjustment acknowledge, CA), and an adjustment commit (adjustment commit, C).

For example, the target bit that indicates to request the second communication apparatus to adjust the bandwidth of the first bearer pipeline may be the reserved bit in the OH field of the frame, or the CR/CA/C/S bit in the OH field of the frame. In other words, the reserved bit in the OH field of the frame may be defined as a function for requesting to adjust the bandwidth, to notify the communication apparatus on the peer side to adjust the bandwidth of the data bearer pipeline; or a function for expanding an existing bit, to notify the communication apparatus on the peer side to adjust the bandwidth of the data bearer pipeline.

Optionally, the slot allocation manner indicated by the first request information specifically includes a correspondence between an fgOMFI and a fine-granularity client identifier, and the fgOMFI indicates a sequence number of overhead information after the bandwidth of the first bearer pipeline is adjusted. A total amount of overhead information in a period after the bandwidth of the first bearer pipeline is adjusted is related to an adjusted bandwidth value. For example, when the bandwidth of the first bearer pipeline is adjusted to 1 Gbps, the total amount of overhead information in the period after the bandwidth of the first bearer pipeline is adjusted is 96, and a sequence number of the overhead information after the bandwidth of the first bearer pipeline is adjusted ranges from 0 to 95. When the bandwidth of the first bearer pipeline is adjusted to 5 Gbps, the total amount of overhead information in the period after the bandwidth of the first bearer pipeline is adjusted is 480, and a sequence number of the overhead information after the bandwidth of the first bearer pipeline is adjusted ranges from 0 to 479.

Usually, in the OH field of the frame, the fgOMFI and the fine-granularity client identifier indicate a correspondence between a slot and a fine-granularity client. For example, in the OH field of the frame, when the fgOMFI is 5 and the fine-granularity client identifier is 1, it indicates that a slot 5 corresponds to the fine-granularity client 1, that is, the slot 5 of the current data bearer pipeline is used to bear service data of the fine-granularity client 1. In a normal communication process between the first communication apparatus and the second communication apparatus, an OH field of each frame carries an fgOMFI and a fine-granularity client identifier, and fgOMFIs carried in OH fields of frames continuously change in a range as a quantity of frames increases (for example, an fgOMFI in a 1^{st} frame is 0, an fgOMFI in a 2^{nd} frame is 1, ..., an fgOMFI in a 96^{th} frame is 95, and an fgOMFI in a 97^{th} frame is 0), to indicate a correspondence between a slot of a current data bearer pipeline and a fine-granularity client. This helps the first communication apparatus and the second communication apparatus determine consistency of correspondences between slots and fine-granularity clients.

When the first request information indicates, via the target bit in the OH field of the frame, to request the second communication apparatus to adjust the bandwidth of the first bearer pipeline, and the target bit in the OH field of the frame received by the second communication apparatus is set to 1, the second communication apparatus may determine that it is currently requested to adjust the bandwidth of the first bearer pipeline. Therefore, the OH field of the frame actually indicates the slot allocation manner after the bandwidth of the first bearer pipeline is adjusted, instead of the slot allocation manner of the current bandwidth of the first bearer pipeline.

In another possible implementation, before the first communication apparatus sends, to the second communication apparatus, the first request information indicating the slot allocation manner after the bandwidth of the first bearer pipeline is adjusted, the first communication apparatus first negotiates with the second communication apparatus about whether to adjust the bandwidth of the first bearer pipeline.

For example, in the foregoing embodiment corresponding to FIG. 4, before the first communication apparatus sends the first request information to the second communication apparatus, the first communication apparatus sends third request information to the second communication apparatus. The third request information is used to request the second communication apparatus to adjust the bandwidth of the first bearer pipeline. In other words, when the first communication apparatus needs to adjust the bandwidth of the first bearer pipeline, the first communication apparatus first sends one piece of request information to the second communication apparatus to request the second communication apparatus to cooperate in adjusting the bandwidth of the first bearer pipeline, to determine whether the second communication apparatus can support adjustment of the bandwidth of the first bearer pipeline.

After the second communication apparatus receives the third request information, if the second communication apparatus supports adjustment of the bandwidth of the first bearer pipeline, the second communication apparatus sends third response information to the first communication apparatus, where the third response information indicates that the second communication apparatus supports adjustment of the bandwidth of the first bearer pipeline.

Therefore, after receiving the third response information, the first communication apparatus may determine that the second communication apparatus supports adjustment of the bandwidth of the first bearer pipeline, and then continue to send the first request information to the second communication apparatus, to indicate a specific slot allocation manner after the bandwidth of the first bearer pipeline is adjusted.

Optionally, the third request information and the third response information are carried in the reserved bit in the OH field of the frame. For example, when sending the frame to the second communication apparatus, the first communication apparatus may set the reserved bit in the OH field in the frame shown in FIG. 6 to 1, to request the second communication apparatus to adjust the bandwidth of the first bearer pipeline.

Alternatively, the third request information and the third response information are carried in a newly defined bit in the OH field of the frame, that is, the new bit is defined, to request the communication apparatus on the peer side to adjust the bandwidth of the data bearer pipeline, or respond to the communication apparatus on the peer side supporting adjustment of the bandwidth of the data bearer pipeline.

Similarly, in the foregoing embodiments, the first request information sent by the first communication apparatus, the first response information sent by the second communication apparatus, and the second request information sent by the first communication apparatus may all be carried in a newly defined bit in the OH field of the frame.

For example, in the first request information, a value of the CR bit in the OH field of a packet is set to 1, to indicate to currently notify the second communication apparatus of the slot allocation manner after the bandwidth of the first bearer pipeline is adjusted. In the first response information, a value of the CA bit in the OH field of a packet is set to 1, to indicate that the second communication apparatus supports the slot allocation manner after the bandwidth of the first bearer pipeline is adjusted. In the second request information, a value of the C bit in the OH field of a packet is set to 1, to instruct the second communication apparatus to cause the slot allocation manner to take effect at the preset time point. Optionally, in the foregoing embodiment, after the first communication apparatus negotiates with the second communication apparatus about the slot allocation manner, the first communication apparatus and the second communication apparatus may cause the preset time point at which the slot allocation manner takes effect in a plurality of implementations.

For example, the preset time point may be a time point that is after the first communication apparatus sends the second request information and at which an fgOMFI corresponding to the first bearer pipeline is 0. Specifically, when sending the frame to the second communication apparatus through the first bearer pipeline, the first communication apparatus includes the fgOMFI in an OH field of each frame, and values of fgOMFIs are continuously polled in a specific range as frames increase (that is, the first communication apparatus inserts, in turn, values of fgOMFIs in a specific range into the frames). Therefore, the first communication apparatus may use, as a boundary node, the time point at which the fgOMFI in the frame borne by the first bearer pipeline is 0, to trigger the two communication apparatuses to simultaneously cause the slot allocation manner to take effect.

For another example, the preset time point is a start time point of a data plane slot after the first communication apparatus sends the second request information. One round of data plane slots are slots corresponding to a data plane in a complete slot period. In other words, the preset time point may be actually a time point starting from an N^{th} slot period after the first communication apparatus sends the second request information, where N is an integer greater than or equal to 1. For example, the preset time point is a start time point of a next slot period after the first communication apparatus sends the second request information. Optionally, in some embodiments, the preset time point may alternatively be a time point at which a start point of a data frame and a start point of a slot period overlap.

Usually, a total quantity of slots in one round of data plane slots is fixed (that is, a slot period is fixed), and the total quantity of slots is related to a bandwidth of a data bearer pipeline. For example, a quantity of slots, in one round of data plane slots, corresponding to the first bearer pipeline whose bandwidth is 5 Gbps is 5*96.

The foregoing describes the process in which the two communication apparatuses negotiate about bandwidth adjustment and configure bandwidth adjustment to take effect at the preset time point. For ease of understanding, the following describes in detail a process in which communication apparatuses implement negotiation in bandwidth increase and decrease scenarios by using specific examples.

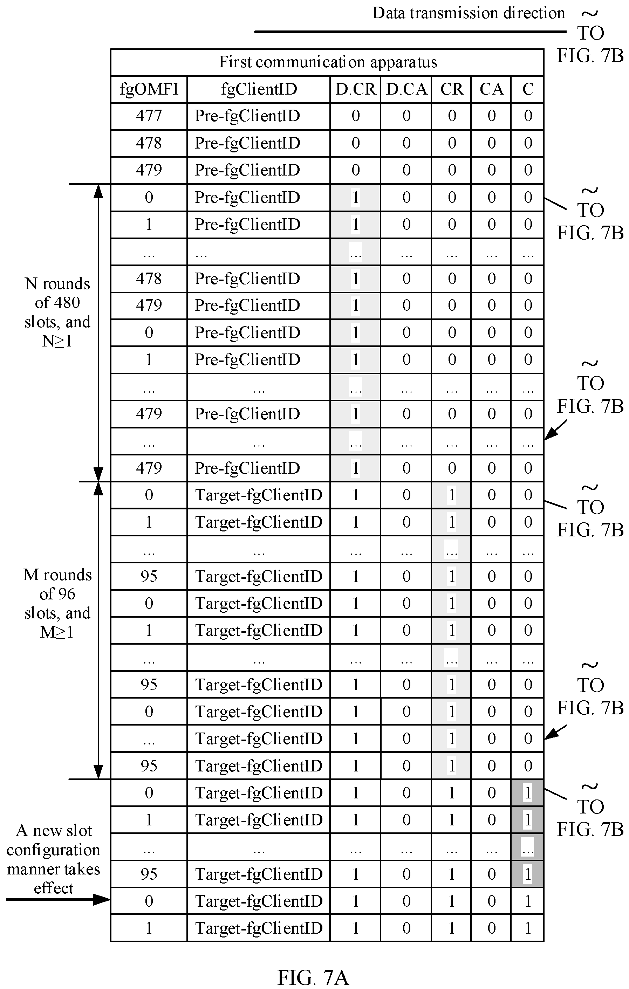

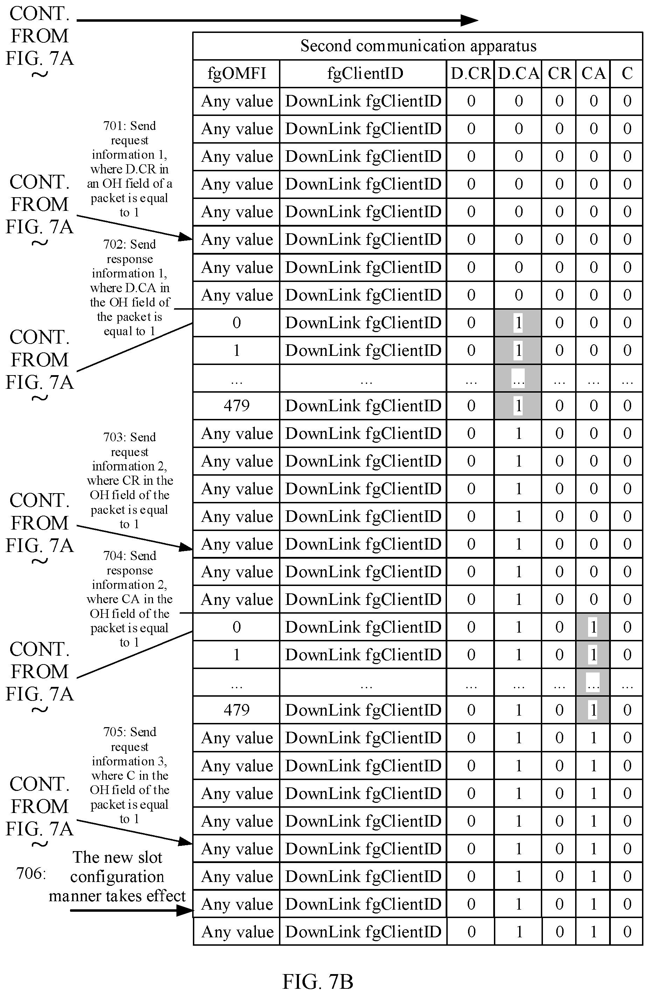

FIG. 7A and FIG. 7B are a schematic flowchart in which communication apparatuses negotiate about decreasing a bandwidth according to an embodiment of this application. As shown in FIG. 7A and FIG. 7B, a procedure in which a first communication apparatus negotiates with a second communication apparatus about decreasing a bandwidth of a first bearer pipeline includes step 701 to step 706 in the following. The first communication apparatus negotiates with the second communication apparatus to decrease the bandwidth of the first bearer pipeline from 5 Gbps to 1 Gbps.

Step 701: The first communication apparatus sends request information 1 to the second communication apparatus, to request the second communication apparatus to adjust the bandwidth of the first bearer pipeline.

In this embodiment, the request information 1 is, for example, the third request information in the foregoing embodiments. A manner in which the first communication apparatus sends the request information 1 to the second communication apparatus may be specifically as follows: For at least one frame sent by the first communication apparatus to the second communication apparatus through the first bearer pipeline, the first communication apparatus sets a value of a D.CR bit in an OH field of the frame to 1, to indicate the second communication apparatus to adjust the bandwidth of the first bearer pipeline that bears the current frame. The D.CR bit may be a reserved bit in the OH field of the frame (for example, any reserved bit located after the fgClientID in the frame shown in FIG. 6) or a newly defined bit, that is, in this embodiment, a reserved bit may be defined as a D.CR bit that indicates to request a communication apparatus on a peer side to adjust the bandwidth of the data bearer pipeline.

It should be noted that, after the first communication apparatus starts to send the request information 1 to the second communication apparatus, the first communication apparatus may continuously include the request information 1 in frames sent to the second communication apparatus through the first bearer pipeline, that is, continuously set values of D.CR bits in OH fields of the frames to 1 until receiving response information fed back by the second communication apparatus. Alternatively, the first communication apparatus may continuously include the request information 1 in frames sent to the second communication apparatus through the first bearer pipeline. After a specific quantity of frames are continuously sent or frames are continuously sent for specific time, the first communication apparatus still does not receive response information fed back by the second communication apparatus. In this case, it may be considered that the second communication apparatus does not support adjustment of the bandwidth of the first bearer pipeline, and the first communication apparatus stops requesting the second communication apparatus to adjust the bandwidth of the first bearer pipeline. Alternatively, the first communication apparatus may include the request information 1 in frames sent to the second communication apparatus through the first bearer pipeline in slot windows whose quantity is limited, instead of continuously sending the request information 1.

Step 702: The second communication apparatus sends response information 1 to the first communication apparatus, to indicate that the second communication apparatus supports adjustment of the bandwidth of the first bearer pipeline.

After the second communication apparatus receives, through the first bearer pipeline, the frame carrying the request information 1, if the second communication apparatus can identify that the frame sent by the first communication apparatus is to request the second communication apparatus to adjust the bandwidth of the first bearer pipeline, and the second communication apparatus can currently support adjustment of the bandwidth of the first bearer pipeline, the second communication apparatus may feed back the response information 1 (the response information 1 is, for example, the foregoing third response information) to the first communication apparatus, to indicate that the second communication apparatus supports adjustment of the bandwidth of the first bearer pipeline.

A manner in which the second communication apparatus sends the response information 1 to the first communication apparatus may be specifically as follows: For at least one frame sent by the second communication apparatus to the first communication apparatus through the first bearer pipeline, the second communication apparatus sets a value of a D.CA bit in an OH field of the frame to 1, to indicate that the second communication apparatus supports adjustment of the bandwidth of the first bearer pipeline that bears the current frame. The D.CA bit may be a reserved bit in the OH field of the frame (for example, a reserved bit located after the fgClientID in the frame shown in FIG. 6) or a newly defined bit, that is, in this embodiment, a reserved bit may be defined as a D.CR bit indicating that adjustment of the bandwidth of the data bearer pipeline is supported. It should be noted that the D.CA bit mentioned in step 2 and the D.CR bit mentioned in step 1 are different bits.

In addition, after the second communication apparatus receives, through the first bearer pipeline, the frame carrying the request information 1, if the second communication apparatus cannot identify that the frame sent by the first communication apparatus is to request the second communication apparatus to adjust the bandwidth of the first bearer pipeline, or the second communication apparatus can identify the frame sent by the first communication apparatus, but does not support adjustment of the bandwidth of the first bearer pipeline (for example, has insufficient resources), the second communication apparatus may not feed back response information to the first communication apparatus or may feed back agreed adjustment rejection information to the first communication apparatus, to indicate that the second communication apparatus rejects adjusting the bandwidth of the first bearer pipeline.

Step 703: The first communication apparatus sends request information 2 to the second communication apparatus, to indicate a slot allocation manner after the bandwidth of the first bearer pipeline is adjusted.

After receiving the response information 1 fed back by the second communication apparatus, the first communication apparatus may determine that the second communication apparatus supports adjustment of the bandwidth of the first bearer pipeline. Therefore, the first communication apparatus continues to send the request information 2 (the request information 2 is, for example, the foregoing first request information) to the second communication apparatus, to further indicate the slot allocation manner after the bandwidth of the first bearer pipeline is adjusted. Because the bandwidth of the data bearer pipeline is directly proportional to the quantity of slots, after the request information 2 indicates the slot allocation manner after the bandwidth of the first bearer pipeline is adjusted, a corresponding bandwidth can be determined based on the quantity of slots in the slot allocation manner, which is equivalent to that the request information 2 can also indicate the adjusted bandwidth of the first bearer pipeline. Optionally, a network management device may alternatively send the adjusted bandwidth of the first bearer pipeline to the second communication apparatus in advance. Therefore, after receiving the slot allocation manner indicated by the request information 2, the second communication apparatus can check whether the adjusted bandwidths, of the first bearer pipeline, respectively indicated by the network management device and the first communication apparatus are the same.

A manner in which the first communication apparatus sends the request information 2 to the second communication apparatus may be specifically as follows: For a frame sent by the first communication apparatus to the second communication apparatus through the first bearer pipeline, the first communication apparatus sets a value of a CR bit (for example, the CR bit shown in FIG. 6) in an OH field of the frame to 1, and includes the slot allocation manner after the bandwidth of the first bearer pipeline is adjusted in an fgOMFI field and an fgClientID field of the frame.

Specifically, when the bandwidth of the first bearer pipeline changes from 5 Gbps to 1 Gbps, in the fgOMFI field of the frame, values of fgOMFIs change alternately in a range of 0 to 95 as frames increase, to indicate 96 slots corresponding to the 1 Gbps bandwidth of the first bearer pipeline. In addition, in the fgClientID field of the frame, fgClientID changes with the value of the fgOMFI field, to indicate a fine-granularity client corresponding to each slot. In other words, in the OH field of the frame, the fgOMFI field may actually indicate a sequence number of each slot provided after the bandwidth of the first bearer pipeline is adjusted, and fgClientID may indicate the fine-granularity client corresponding to the slot indicated by the fgClientID field. Therefore, the first communication apparatus sends 96 frames to the second communication apparatus, and an OH field of each frame carries a different fgOMFI value and a corresponding fgClientID value, to indicate the slot allocation manner after the bandwidth of the first bearer pipeline is adjusted.

As shown in FIG. 7A and FIG. 7B, in step 701, in a process in which the first communication apparatus sends the request information 1, values of fgOMFIs change within a range of 0 to 479, and a value of fgClientID is Pre-fgClientID, that is, the fgOMFI field and fgClientID indicate a slot allocation manner before the bandwidth of the first bearer pipeline is adjusted. In this step, in a process of sending the request information 2 by the first communication apparatus, values of fgOMFIs change within a range of 0 to 95, and a value of fgClientID is Target-fgClientID, that is, the fgOMFI field and fgClientID indicate the slot allocation manner after the bandwidth of the first bearer pipeline is adjusted.

It should be noted that ranges of fgOMFIs corresponding to the slot allocation manner after the bandwidth of the first bearer pipeline is adjusted and the slot allocation manner before the bandwidth of the first bearer pipeline is adjusted may change (for example, when the bandwidth of the first bearer pipeline changes from 5 Gbps to 1 Gbps, the range of fgOMFIs corresponding to the slot allocation manner changes from a range of 0 to 479 to a range of 0 to 95). Therefore, to ensure that the second communication apparatus can normally receive frames during bandwidth adjustment negotiation, the first communication apparatus may start to send the request information 2 to the second communication apparatus at a moment at which fgOMFI in a next round is 0. In addition, when the first communication apparatus starts to send the request information 2 to the second communication apparatus, the range of fgOMFIs in the frames sent by the first communication apparatus changes from a range of 0 to 479 to a range of 0 to 95.

It should be noted that in step 703, the first communication apparatus actually transfers, via the OH field of the frame, the slot allocation manner (namely, the new slot allocation manner) after the bandwidth of the first bearer pipeline is adjusted, and the frame sent by the first communication apparatus to the second communication apparatus is further used to bear data (namely, data borne in a payload field of the frame) of the fine-granularity client. Before the new slot allocation manner takes effect, the first communication apparatus still sends the data of the fine-granularity client to the second communication apparatus in the original slot allocation manner obtained through negotiation, and the second communication apparatus also receives the data of the fine-granularity client in the original slot allocation manner obtained through negotiation, to ensure normal transmission of the data of the fine-granularity client.

Step 704: The second communication apparatus sends response information 2 to the first communication apparatus, to indicate that the second communication apparatus supports the slot allocation manner after the bandwidth of the first bearer pipeline is adjusted.

When the second communication apparatus receives the request information 2 sent by the first communication apparatus, and determines that the second communication apparatus can support the new slot allocation manner indicated by the first communication apparatus, the second communication apparatus sends the response information 2 (the response information 2 is, for example, the foregoing first response information) to the first communication apparatus, to indicate that the second communication apparatus supports the slot allocation manner after the bandwidth of the first bearer pipeline is adjusted. If the second communication apparatus cannot support the new slot allocation manner indicated by the first communication apparatus, the second communication apparatus does not feed back response information or feeds back adjustment rejection information to the first communication apparatus, to terminate the bandwidth adjustment.

A manner in which the second communication apparatus sends the response information 2 to the first communication apparatus may be specifically as follows: For each frame sent by the second communication apparatus to the first communication apparatus through the first bearer pipeline, the second communication apparatus sets a value of a CA bit (for example, the CA bit shown in FIG. 6) in an OH field of the frame to 1.

Step 705: The first communication apparatus sends request information 3 to the second communication apparatus, to indicate that the second communication apparatus causes the new slot allocation manner to take effect at a preset time point.

After receiving the response information 2 fed back by the second communication apparatus, the first communication apparatus may determine that the second communication apparatus supports the slot allocation manner after the bandwidth of the first bearer pipeline is adjusted. Therefore, the first communication apparatus continues to send the request information 3 (the request information 3 is, for example, the foregoing second request information) to the second communication apparatus. This helps the first communication apparatus and the second communication apparatus cause the new slot allocation manner (namely, the slot allocation manner after the bandwidth of the first bearer pipeline is adjusted) to take effect at the same time point, to ensure normal receiving/sending of the frames.

A manner in which the first communication apparatus sends the request information 3 to the second communication apparatus may be specifically as follows: For each frame sent by the first communication apparatus to the second communication apparatus through the first bearer pipeline, the first communication apparatus sets a value of a C bit (for example, the C bit shown in FIG. 6) in the OH field of the frame to 1.

It should be noted that, after receiving the response information 2 fed back by the second communication apparatus, the first communication apparatus may perform, on a data plane, preparation for sending data in the new slot allocation manner, for example, generate a slot table of the data plane based on the new slot allocation manner, to quickly switch to the new slot allocation manner to send data at the preset time point. In addition, after receiving the response information 2, the first communication apparatus may alternatively perform, on the data plane, preparation for sending data in the new slot allocation manner. This is not specifically limited in this embodiment.

Similarly, after receiving the request information 2 or the request information 3 sent by the first communication apparatus, the second communication apparatus may also perform, on the data plane, preparation for receiving data in the new slot allocation manner, for example, generate a slot table of the data plane based on the new slot allocation manner, to quickly switch to the new slot allocation manner to receive data at the preset time point.

Step 706: The first communication apparatus and the second communication apparatus cause the new slot allocation manner to take effect at the preset time point.

In this embodiment, step 706 is similar to step 404. For details, refer to step 404. Details are not described herein again.

In other words, in the process in which the first communication apparatus negotiates with the second communication apparatus about the new slot allocation manner, only the slot allocation manner indicated by the OH field changes, and the first communication apparatus and the second communication apparatus actually receive/send data on the data plane in the original slot allocation manner obtained through negotiation (which is equivalent to that the slot allocation manner on the OH plane is different from the slot allocation manner actually executed on the data plane). After the new slot allocation manner takes effect, the first communication apparatus and the second communication apparatus may receive/send data in the new slot allocation manner. In addition, in the foregoing examples, the bandwidth of the first bearer pipeline changes from 5 Gbps (namely, 5*1 Gbps) to 1 Gbps at a granularity of 1 Gbps. In some possible examples, alternatively, the bandwidth of the first bearer pipeline may flexibly change within a specific bandwidth range at a granularity of another bandwidth value. This is not limited in this embodiment. For example, the bandwidth of the first bearer pipeline may change from 10 Gbps (namely, 2*5 Gbps) to 5 Gbps (namely, 1*5 Gbps) at a granularity of 5 Gbps.

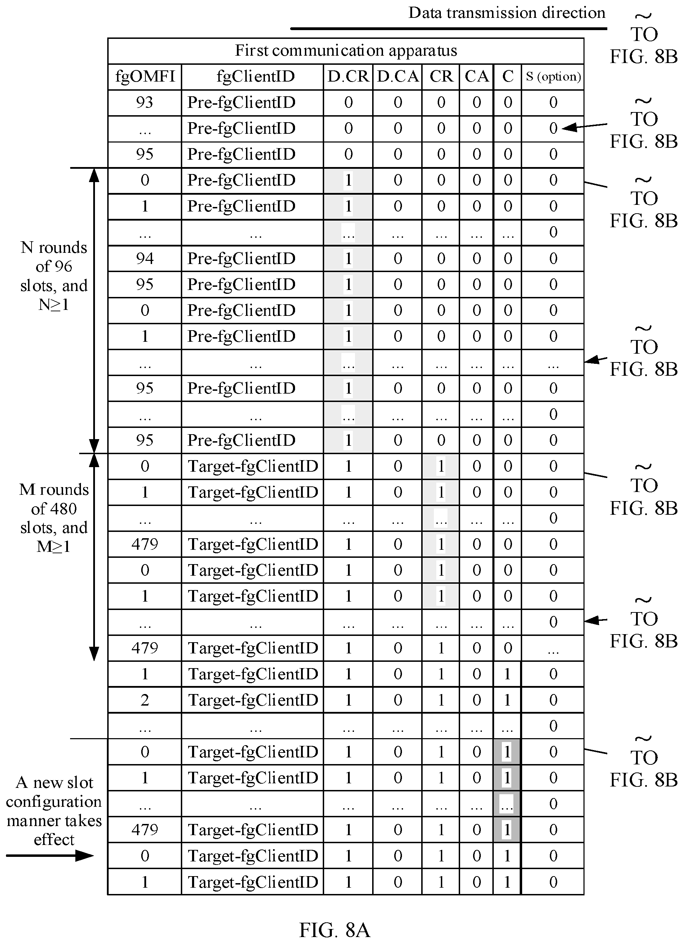

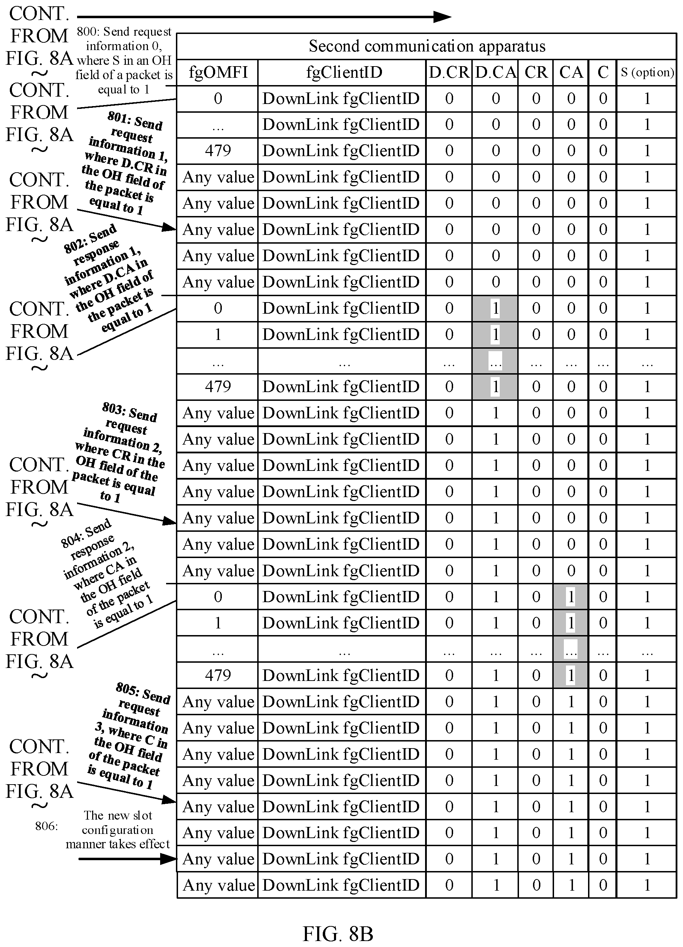

FIG. 8A and FIG. 8B are a schematic flowchart in which communication apparatuses negotiate about increasing a bandwidth according to an embodiment of this application. As shown in FIG. 8A and FIG. 8B, a procedure in which a first communication apparatus negotiates with a second communication apparatus about increasing a bandwidth of a first bearer pipeline includes step 800 to step 806 in the following.

Step 800: The second communication apparatus sends request information 0 to the first communication apparatus, to request the first communication apparatus to initiate negotiation about adjustment of the bandwidth of the first bearer pipeline.

In this embodiment, a manner in which the second communication apparatus sends the request information 0 to the first communication apparatus may be specifically as follows: For each frame sent by the second communication apparatus to the first communication apparatus through the first bearer pipeline, the second communication apparatus sets a value of a D.S bit in an OH field of the frame to 1. The D.S bit used in this step may be a newly defined bit in the OH field of the frame.

It should be noted that step 800 is optional, and actually, the first communication apparatus may directly send, to the second communication apparatus, information for requesting to adjust the bandwidth of the data bearer pipeline.

Step 801: The first communication apparatus sends request information 1 to the second communication apparatus, to request the second communication apparatus to adjust the bandwidth of the first bearer pipeline.

Step 802: The second communication apparatus sends response information 1 to the first communication apparatus, to indicate that the second communication apparatus supports adjustment of the bandwidth of the first bearer pipeline.

In this embodiment, step 801 and step 802 are similar to step 701 and step 702. For details, refer to step 701 and step 702. Details are not described herein again.

Step 803: The first communication apparatus sends request information 2 to the second communication apparatus, to indicate a slot allocation manner after the bandwidth of the first bearer pipeline is adjusted.

In this embodiment, a difference between step 803 and step 703 lies in that the slot allocation manner indicated by the request information 2 in step 803 is an allocation manner of 480 slots (namely, a slot 0 to a slot 479), and the slot allocation manner indicated by the request information 2 in step 703 is an allocation manner of 96 slots (namely, a slot 0 to a slot 95).

As shown in FIG. 8A and FIG. 8B, in step 803, the bandwidth of the first bearer pipeline changes from 1 Gbps to 5 Gbps. Therefore, a range of fgOMFIs changes from a range of 0 to 96 to a range of 0 to 479.

Step 804: The second communication apparatus sends response information 2 to the first communication apparatus, to indicate that the second communication apparatus supports the slot allocation manner after the bandwidth of the first bearer pipeline is adjusted.

Step 805: The first communication apparatus sends request information 3 to the second communication apparatus, to indicate that the second communication apparatus causes the new slot allocation manner to take effect at a preset time point.

Step 806: The first communication apparatus and the second communication apparatus cause the new slot allocation manner to take effect at the preset time point.

In this embodiment, step 804 to step 806 are similar to step 704 to step 706. For details, refer to step 704 to step 706. Details are not described herein again.

The foregoing describes the process in which the communication apparatuses implement negotiation about bandwidth adjustment in the bandwidth increase and decrease scenarios. The following describes a plurality of cases that may occur in the new slot allocation manner compared with the old slot allocation manner when the communication apparatuses negotiates about the slot allocation manner.

Case 1: After the bandwidth of the data bearer pipeline is adjusted, a fine-granularity client that uses the data bearer pipeline does not change, but quantities of slots corresponding to some or all fine-granularity clients change.

For example, in the foregoing embodiments, after the bandwidth of the first bearer pipeline is adjusted, the fine-granularity client that uses the first bearer pipeline does not change, but a quantity of slots corresponding to a target fine-granularity client that uses the first bearer pipeline changes. The target fine-granularity clients may be some or all fine-granularity clients that use the first bearer pipeline.

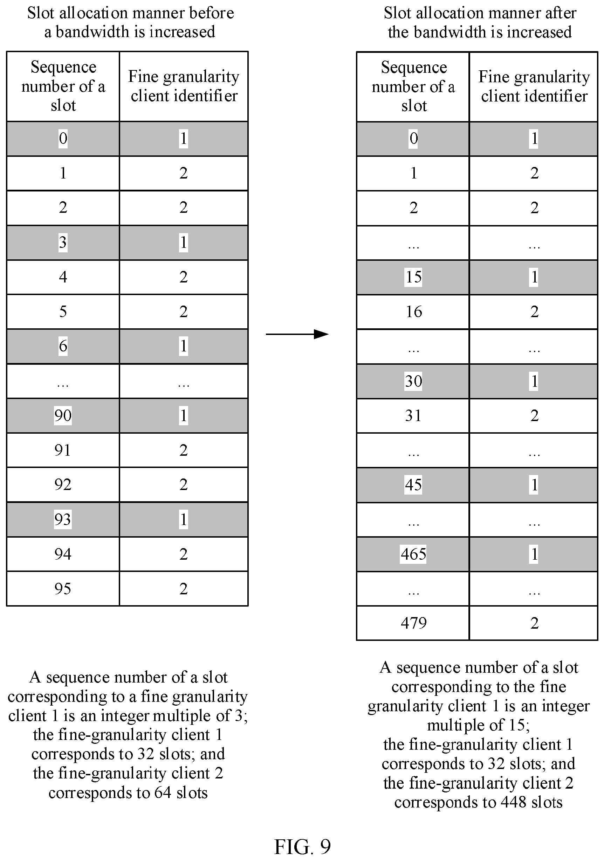

For example, FIG. 9 is a diagram of a change of a slot allocation manner before and after a bandwidth of a data bearer pipeline is increased according to an embodiment of this application. As shown in FIG. 9, before the bandwidth of the data bearer pipeline is increased, the bandwidth of the data bearer pipeline is 1 Gbps, the data bearer pipeline corresponds to 96 slots (namely, a slot 0 to a slot 95), and the 96 slots are respectively allocated to a fine-granularity client 1 and a fine-granularity client 2. A sequence number of the slot corresponding to the fine-granularity client 1 is an integer multiple of 3, that is, a slot 0, a slot 3, a slot 6, ..., and a slot 93. The fine-granularity client 1 corresponds to 32 slots in total. The slots corresponding to the fine-granularity client 2 are slots in the 96 slots other than the slots occupied by the fine-granularity client 1, that is, a slot 1, a slot 2, a slot 4, a slot 5, ..., a slot 94, and a slot 95. The fine-granularity client 1 corresponds to 64 slots in total.

After the bandwidth of the data bearer pipeline is increased, the bandwidth of the data bearer pipeline changes from 1 Gbps to 5 Gbps, the data bearer pipeline corresponds to 480 slots (namely, a slot 0 to a slot 479), and the 480 slots are still allocated to the fine-granularity client 1 and the fine-granularity client 2. A quantity of slots corresponding to the fine-granularity client 1 does not change, that is, the fine-granularity client 1 still corresponds to 32 slots. In addition, a sequence number of the slot corresponding to the fine-granularity client 1 is an integer multiple of 15, that is, the fine-granularity client 1 corresponds to a slot 0, a slot 15, a slot 30, ..., and a slot 465. The slots corresponding to the fine-granularity client 2 are slots in the 480 slots other than the slots occupied by the fine-granularity client 1, that is, a slot 1, a slot 2, ..., a slot 14, ..., and a slot 479. The fine-granularity client 2 corresponds to 448 slots in total.

In other words, in the example shown in FIG. 9, the quantity of slots corresponding to the fine-granularity client 1 does not change, and the quantity of slots corresponding to the fine-granularity client 2 changes. Specifically, the quantity of slots corresponding to the fine-granularity client 2 changes from 64 slots to 448 slots.

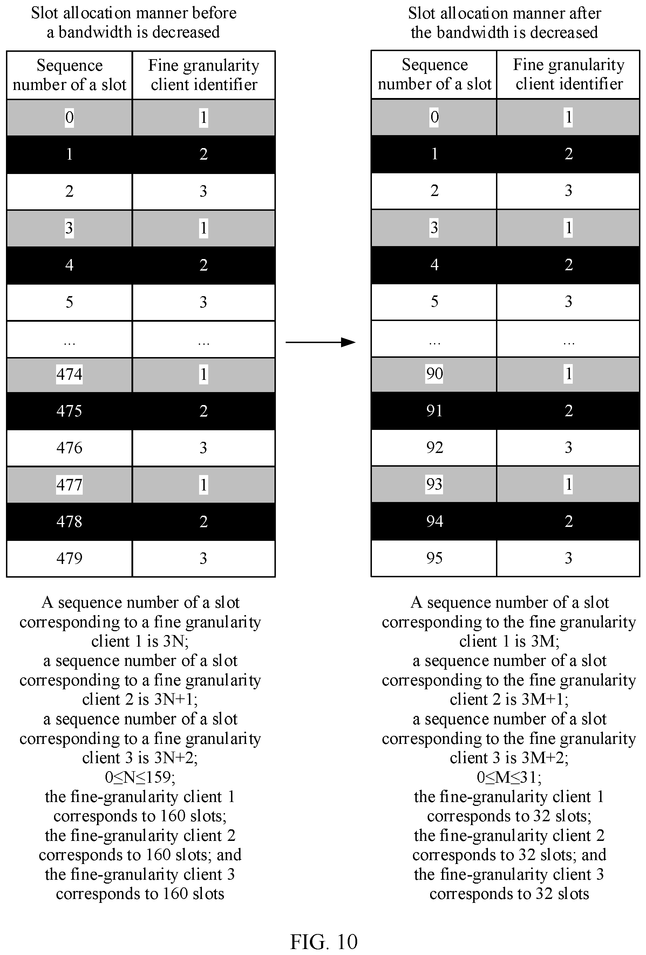

For another example, FIG. 10 is a diagram of a change of a slot allocation manner before and after a bandwidth of a data bearer pipeline is decreased according to an embodiment of this application. As shown in FIG. 10, before the bandwidth of the data bearer pipeline is decreased, the bandwidth of the data bearer pipeline is 5 Gbps, the data bearer pipeline corresponds to 480 slots (namely, a slot 0 to a slot 479), and the 480 slots are respectively allocated to a fine-granularity client 1, a fine-granularity client 2, and a fine-granularity client 3. A sequence number of the slot corresponding to the fine-granularity client 1 is 3N, a sequence number of the slot corresponding to the fine-granularity client 2 is 3N+1, and a sequence number of the slot corresponding to the fine-granularity client 3 is 3N+2, where N is an integer and 0≤N≤159. In other words, each fine-granularity client corresponds to 160 slots.

After the bandwidth of the data bearer pipeline is decreased, the bandwidth of the data bearer pipeline changes from 5 Gbps to 1 Gbps, the data bearer pipeline corresponds to 96 slots (namely, a slot 0 to a slot 95), and the 96 slots are respectively allocated to the fine-granularity client 1, the fine-granularity client 2, and the fine-granularity client 3. A sequence number of the slot corresponding to the fine-granularity client 1 is 3M, a sequence number of the slot corresponding to the fine-granularity client 2 is 3M+1, and a sequence number of the slot corresponding to the fine-granularity client 3 is 3M+2, where M is an integer and 0≤N≤31. In other words, each fine-granularity client corresponds to 32 slots.

In other words, in the example shown in FIG. 10, the quantities of slots corresponding to the fine-granularity client 1, the fine-granularity client 2, and the fine-granularity client 3 all change, and specifically, change from 160 slots to 32 slots.

Case 2: After the bandwidth of the data bearer pipeline is adjusted, a fine-granularity client that uses the data bearer pipeline changes.

For example, in the foregoing embodiments, in comparison with the case before the bandwidth is adjusted, after the bandwidth of the first bearer pipeline is adjusted, the fine-granularity client that uses the first bearer pipeline changes. In addition, the slot allocation manner indicated by the first request information of the first communication apparatus indicates a correspondence between the changed fine-granularity client and a slot corresponding to the first bearer pipeline.

For example, before the bandwidth of the first bearer pipeline is adjusted, fine-granularity clients that use the first bearer pipeline include a fine-granularity client 1 to a fine-granularity client 5; and after the bandwidth of the first bearer pipeline is adjusted, fine-granularity clients that use the first bearer pipeline include a fine-granularity client 1 to a fine-granularity client 10. Alternatively, before the bandwidth of the first bearer pipeline is adjusted, fine-granularity clients that use the first bearer pipeline include a fine-granularity client 1 to a fine-granularity client 15; and after the bandwidth of the first bearer pipeline is adjusted, fine-granularity clients that use the first bearer pipeline include a fine-granularity client 1 to a fine-granularity client 5. Alternatively, before the bandwidth of the first bearer pipeline is adjusted, fine-granularity clients that use the first bearer pipeline include a fine-granularity client 1 to a fine-granularity client 5; and after the bandwidth of the first bearer pipeline is adjusted, fine-granularity clients that use the first bearer pipeline include a fine-granularity client 1 to a fine-granularity client 4 and a fine-granularity client 6. In other words, as the bandwidth of the first bearer pipeline is adjusted, that the fine-granularity client that uses the first bearer pipeline changes may mean that a quantity of fine-granularity client increases or decreases, or that the fine-granularity client is replaced. This is not specifically limited in this embodiment.

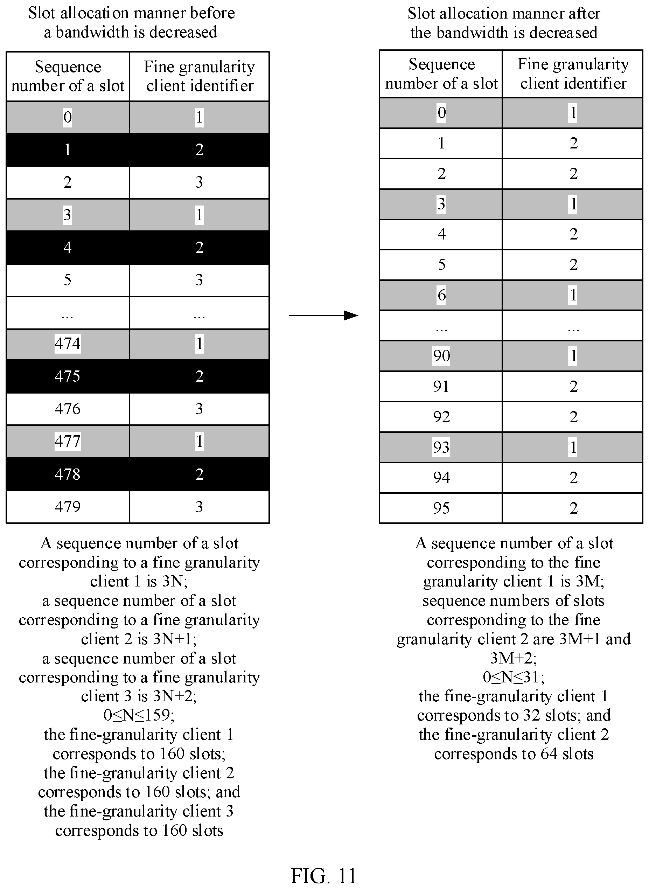

FIG. 11 is another diagram of a change of a slot allocation manner before and after a bandwidth of a data bearer pipeline is decreased according to an embodiment of this application. As shown in FIG. 11, before the bandwidth of the data bearer pipeline is decreased, the bandwidth of the data bearer pipeline is 5 Gbps, the data bearer pipeline corresponds to 480 slots (namely, a slot 0 to a slot 479), and the 480 slots are respectively allocated to a fine-granularity client 1, a fine-granularity client 2, and a fine-granularity client 3. A sequence number of the slot corresponding to the fine-granularity client 1 is 3N, a sequence number of the slot corresponding to the fine-granularity client 2 is 3N+1, and a sequence number of the slot corresponding to the fine-granularity client 3 is 3N+2, where N is an integer and 0≤N≤159. In other words, each fine-granularity client corresponds to 160 slots.

After the bandwidth of the data bearer pipeline is decreased, the bandwidth of the data bearer pipeline changes from 5 Gbps to 1 Gbps, the data bearer pipeline corresponds to 96 slots (namely, a slot 0 to a slot 95), and the 96 slots are respectively allocated to the fine-granularity client 1 and the fine-granularity client 2. In other words, the clients corresponding to the data bearer pipeline change from the fine-granularity client 1, the fine-granularity client 2, and the fine-granularity client 3 to the fine-granularity client 1 and the fine-granularity client 2. A sequence number of the slot corresponding to the fine-granularity client 1 is 3M, and sequence numbers of the slots corresponding to the fine-granularity client 2 is 3M+1 and 3M+2, where M is an integer and 0≤N≤31.

In other words, in the example shown in FIG. 11, the slots corresponding to the fine-granularity client 1 change from 160 slots to 32 slots, the slots corresponding to the fine-granularity client 2 change from 160 slots to 64 slots, and the fine-granularity client 3 no longer uses the data bearer pipeline.

It can be learned from the descriptions of the foregoing embodiments that, in the process in which the first communication apparatus negotiates with the second communication apparatus about bandwidth adjustment, the first communication apparatus and the second communication apparatus use the OH field in the frame to carry negotiation content of bandwidth adjustment, and the payload field in the frame can normally carry the service data of the fine-granularity client. In view of this, the following describes how to ensure that the service data of the fine-granularity client is normally transmitted on the data plane and implement transfer of the negotiation content in the negotiation process between the first communication apparatus and the second communication apparatus.

For example, before the first communication apparatus sends the first request information to the second communication apparatus, the first communication apparatus generates a slot table of an OH plane, where the slot table of the OH plane indicates the slot corresponding to the first bearer pipeline and OH information that needs to be transmitted in the slot corresponding to the first bearer pipeline, and the OH information is information in the OH field of the frame. The slot table of the OH plane is relative to the slot table of the data plane. The slot table of the data plane usually indicates data of which fine-granularity clients needs to be sent in each slot, and the slot table of the OH plane indicates which OH information needs to be sent in each slot corresponding to the first bearer pipeline.

Then, the first communication apparatus transfers the OH information to the data plane based on the slot table of the OH plane, to enable the data plane to send the first request information, the second request information, or the third request information in the slot corresponding to the first bearer pipeline. In other words, when the first communication apparatus sends the frame to the second communication apparatus on the data plane, the first communication apparatus transfers the OH information to the data plane based on the slot table of the OH plane, so that the data plane can organize the obtained OH information into content in the OH field of the frame for sending in the slot corresponding to the first bearer pipeline. Therefore, the first request information, the second request information, or the third request information is sent. It should be noted that, in different phases (that is, processes of sending different request information), content in the slot table of the OH plane may change, to implement sending of different request information on the data plane.

It may be understood that one dedicated network line usually includes a plurality of data bearer pipelines, and different data bearer pipelines respectively correspond to a specific quantity of slots. All slots corresponding to each data bearer pipeline are included in a complete slot period corresponding to the dedicated network line, and all slots corresponding to each data bearer pipeline are arranged in a specific manner, to send service data borne in each data bearer pipeline in turn. Usually, the slot table of the data plane is used to record an arrangement status of slots corresponding to all data bearer pipelines in the complete slot period corresponding to the dedicated network line. Therefore, which OH information (namely, content in the first request information, the second request information, and the third request information) that needs to be transmitted in which slots (namely, the slot corresponding to the first bearer pipeline) can be determined based on the slot table of the OH plane, to ensure that the slot table of the data plane does not need to be changed, and ensure that service data of the fine-granularity client can be normally sent. Only content in the OH field in the frame corresponding to the fine-granularity client changes.

Similarly, before sending the first response information and the third response information, the second communication apparatus may alternatively generate the corresponding slot table of the OH plane in advance, to transfer the corresponding OH information to the data plane. This ensures that the first response information and the third response information can be sent on the data plane in the slot corresponding to the first bearer pipeline.

Optionally, to improve efficiency of configuring the new slot allocation manner by the first communication apparatus to take effect, the first communication apparatus may generate a secondary slot table of the data plane based on the slot allocation manner indicated by the first request information. The secondary slot table of the data plane indicates distribution of slots corresponding to the fine-granularity client after the bandwidth of the first bearer pipeline is adjusted. In addition, the secondary slot table of the data plane further indicates distribution of slots corresponding to another data bearer pipeline in the dedicated network line.

Then, the first communication apparatus switches the secondary slot table of the data plane to a primary slot table at the preset time point, so that the first communication apparatus can send the service data based on the new slot allocation manner after the preset time point.

In this solution, the secondary slot table of the data plane is generated in advance, and the secondary slot table that is generated in advance is switched to the primary slot table at the preset time point, to improve efficiency of slot table switching. This can ensure that the service data is normally transmitted in the old slot allocation manner before the preset time point, and the service data is transmitted in the new slot allocation manner after the preset time point, to ensure that normal transmission of the service data is not affected in the bandwidth adjustment process.

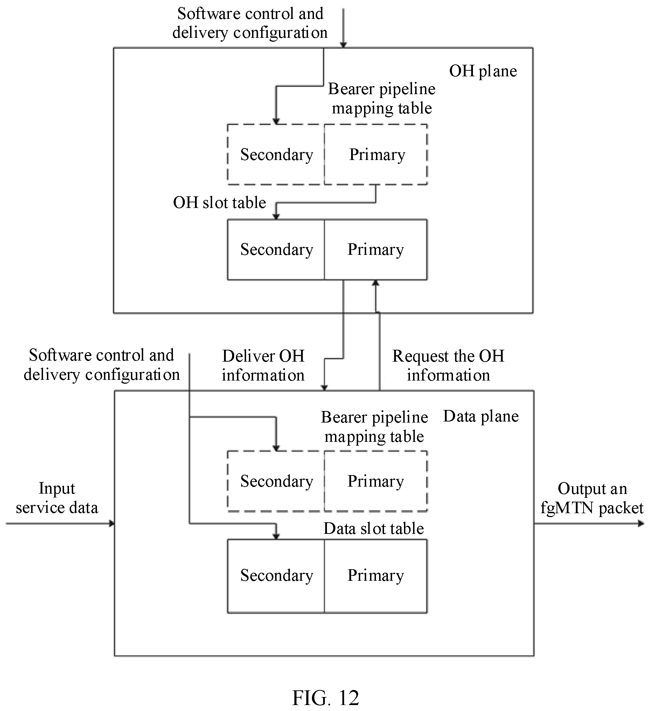

FIG. 12 is a diagram of interaction between an OH plane and a data plane according to an embodiment of this application. As shown in FIG. 12, the OH plane includes a bearer pipeline mapping table and a slot table of the OH plane (referred to as an OH slot table in FIG. 12 for short), and the data plane includes a bearer pipeline mapping table and a slot table of the data plane (referred to as a data slot table in FIG. 12 for short). The OH plane may deliver OH information to the data plane based on the slot table of the OH plane, so that the data plane can obtain content carried in an OH field in an fgMTN frame. A fine-granularity client corresponding to each slot can be determined based on the slot table of the data plane, to determine data content that needs to be sent in each slot.

Each set of bearer pipeline mapping table and slot table are classified into a primary table and a secondary table, that is, one set of bearer pipeline mapping table includes a primary bearer pipeline mapping table and a secondary bearer pipeline mapping table, and one set of slot table includes a primary slot table and a secondary slot table. Based on the form of a primary table and a secondary table, the secondary table can be constructed in advance, and the secondary table is switched to the primary table at a specific time point, to prevent a change in content of the bearer pipeline mapping table or the slot table from affecting normal transmission of service data.

For example, in the bandwidth adjustment process, for the slot table of the OH plane and the slot table of the data plane, switching between the primary table and the secondary table may be implemented by using a corresponding primary table flag register. For example, when a value of the primary table flag register is 0, it indicates that a slot table A of the OH plane is a primary table. When the value of the primary table flag register is 1, it indicates that a slot table B of the OH plane is a primary table. Therefore, quick switching between the primary table and the secondary table can be implemented by modifying the value of the primary table flag register.

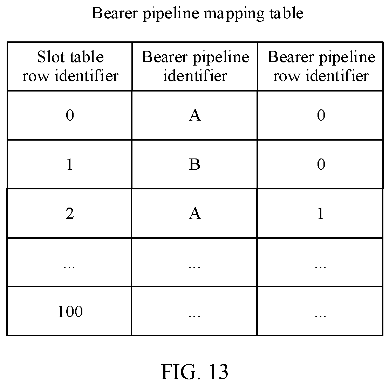

The bearer pipeline mapping table of the OH plane and the bearer pipeline mapping table of the data plane have same functions, and both are used to guide generation of slot tables. FIG. 13 is a diagram of a format of a bearer pipeline mapping table according to an embodiment of this application. As shown in FIG. 13, the bearer pipeline mapping table usually includes a plurality of rows, and each row indicates a belonging relationship of slots at a granularity of 1 G. It should be noted that each row indicating a belonging relationship of slots at a granularity of 1 G is merely a possible example. During actual application, each row may alternatively indicate a belonging relationship of slots at a granularity of 1 G, a granularity of 2 G, or a granularity of 5 G, and may be specifically related to a granularity value at which the bandwidth of the data bearer pipeline changes. This is not specifically limited in this embodiment.

In FIG. 13, it is assumed that a bandwidth of a network device interface is 100 Gbps, the bearer pipeline mapping table includes 100 rows, and a column 1 in the bearer pipeline mapping table indicates a row identifier in the slot table. A column 2 in the bearer pipeline mapping table indicates a bearer pipeline identifier corresponding to a row identifier in the current slot table, that is, a data bearer pipeline corresponding to each row of slot in the slot table. A column 3 in the bearer pipeline mapping table indicates a specific row, corresponding to the row identifier in the current slot table, of slots of the data bearer pipeline.

For example, in FIG. 13, when the row identifier in the slot table is 0, the bearer pipeline identifier is A, and a bearer pipeline row identifier is 0, which indicates that a slot in a row 0 in the slot table belongs to a data bearer pipeline A, and the slot in the row 0 is a slot in a row 0 of the data bearer pipeline A. When the row identifier in the slot table is 1, the bearer pipeline identifier is B, and a bearer pipeline row identifier is 0, which indicates that a slot in a row 1 in the slot table belongs to a data bearer pipeline B, and the slot in the row 1 is a slot in a row 0 of the data bearer pipeline B. When the row identifier in the slot table is 2, the bearer pipeline identifier is A, and a bearer pipeline row identifier is 1, which indicates that a slot in a row 2 in the slot table belongs to the data bearer pipeline A, and the slot in the row 2 is a slot in a row 1 of the data bearer pipeline A.

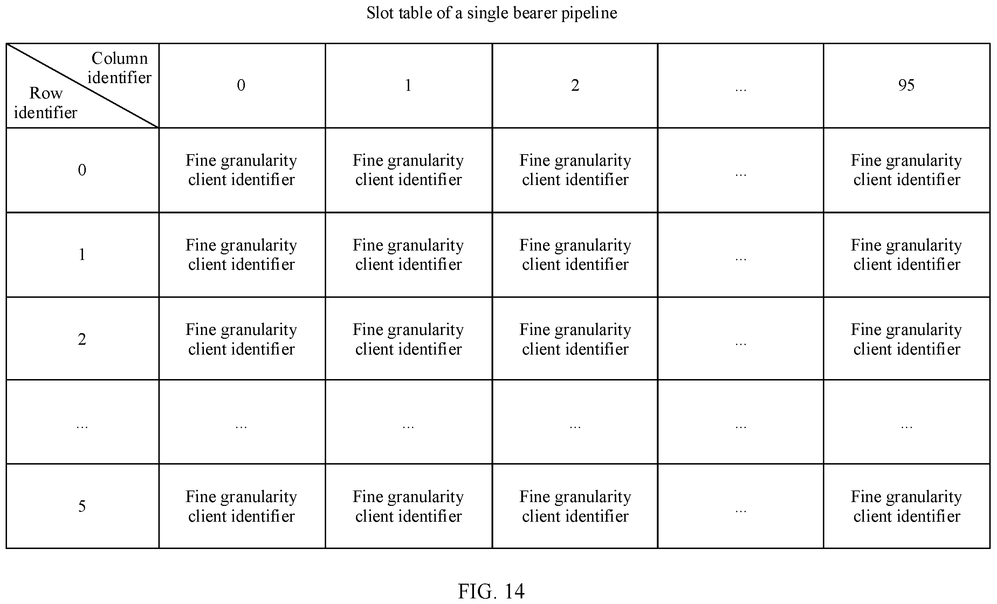

FIG. 14 shows a slot table of a single bearer pipeline according to an embodiment of this application. As shown in FIG. 14, for any data bearer pipeline, the data bearer pipeline may be divided into X*96 slots, where X is an integer greater than or equal to 1. For example, when the bandwidth of the data bearer pipeline is 1 Gbps, the data bearer pipeline may be divided into 96 slots. When the bandwidth of the data bearer pipeline is 5 Gbps, the data bearer pipeline may be divided into 5*96 (namely, 480) slots. Therefore, a slot table of a single bearer pipeline may include one or more rows, and each row indicates a correspondence between 96 slots in the current row and a fine-granularity client. Therefore, a data bearer pipeline corresponding to each row of slots in the slot table and a fine-granularity client corresponding to each slot in each row of slots may be determined based on the slot table of the single bearer pipeline and the bearer pipeline mapping table shown in FIG. 13.

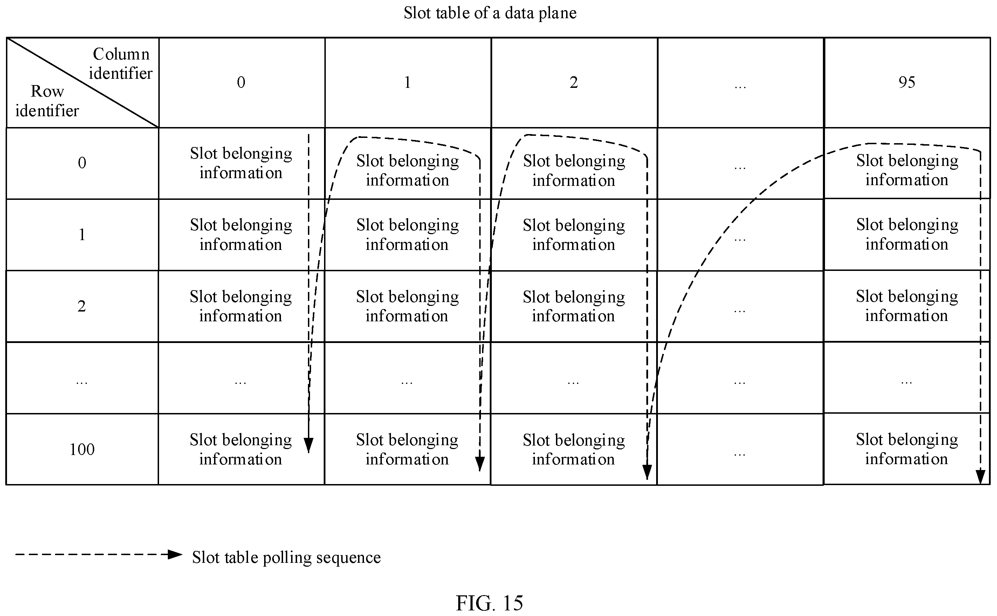

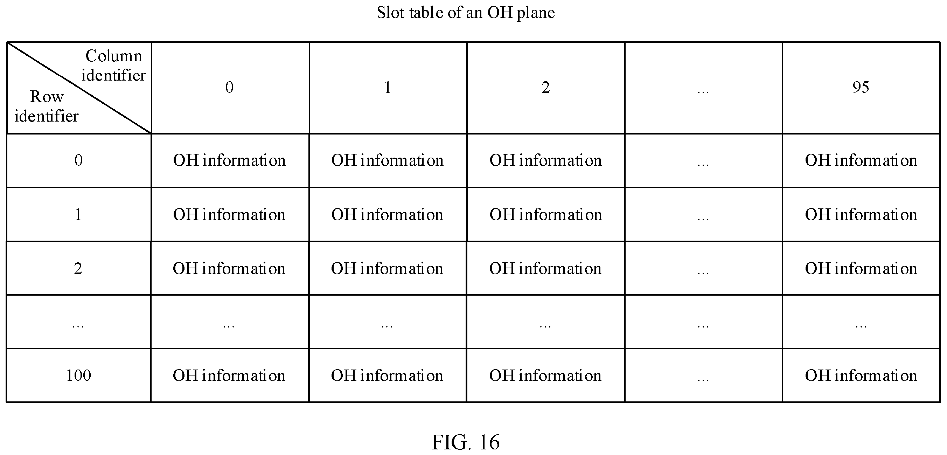

FIG. 15 is a diagram of a slot table of a data plane according to an embodiment of this application. FIG. 16 is a diagram of a slot table of an OH plane according to an embodiment of this application. First, refer to FIG. 15. FIG. 15 shows the slot table of the data plane. The slot table of the data plane indicates an arrangement status of all slots in one slot period of the dedicated network line. Specifically, the slot table of the data plane includes a plurality of rows, and each row includes 96 columns. A quantity of rows included in the slot table of the data plane is related to the bandwidth of the dedicated network line, and one row corresponds to a bandwidth of 1 Gbps, that is, a dedicated network line with a bandwidth of 100 Gbps corresponds to a table with 100 rows. In addition, each row includes 96 columns (namely, 0 to 95), which indicates 96 slots corresponding to a bandwidth at a granularity of 1 Gbps. Therefore, each cell in the slot table of the data plane corresponds to a unique slot, and all cells in the slot table of the entire data plane can indicate all slots (namely, one round of data plane slots) in a complete slot period. In addition, each cell in the slot table of the data plane records belonging information of a slot corresponding to the current cell. Therefore, the slot table of the data plane is polled in a specific sequence, to determine a data bearer pipeline corresponding to each slot and a fine-granularity client in the data bearer pipeline, so as to send service data of the fine-granularity client in turn.

Then, refer to FIG. 16. In FIG. 16, the slot table of the OH plane indicates OH information corresponding to each slot, that is, indicates OH information that needs to be sent in each slot. Based on the slot table of the OH plane, the first communication apparatus can determine the OH information that needs to be transferred in the slot to which the first bearer pipeline belongs, and transfer the corresponding OH information to the data plane in advance, so that the data plane can organize the obtained OH information into content in the OH field of the frame for sending in the slot to which the first bearer pipeline belongs. Therefore, the first request information, the second request information, or the third request information is sent.

The foregoing describes the bandwidth adjustment method provided in embodiments of this application. The following describes a device configured to perform the bandwidth adjustment method.

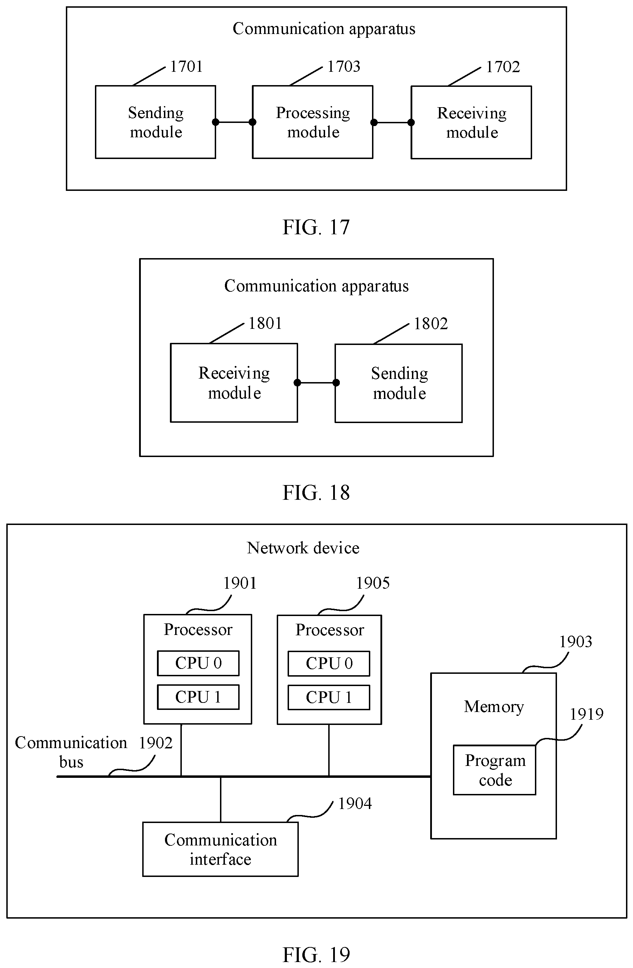

FIG. 17 is a diagram of a structure of a communication apparatus according to an embodiment of this application. In a possible example, the communication apparatus is a first communication apparatus in an fgMTN, and the communication apparatus includes: a sending module 1701, configured to send first request information to a second communication apparatus, where the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN; and a receiving module 1702, configured to receive first response information sent by the second communication apparatus, where the first response information indicates that the second communication apparatus supports the slot allocation manner. The sending module 1701 is further configured to send second request information to the second communication apparatus, where the second request information indicates that the second communication apparatus causes the slot allocation manner to take effect at a preset time point.

In a possible implementation, the first bearer pipeline is a data bearer pipeline in a dedicated network line of the fgMTN, the dedicated network line includes a plurality of data bearer pipelines, and the first bearer pipeline is used to bear service data of one or more fine-granularity clients.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0.

Alternatively, the preset time point is a start time point of a data plane slot after the first communication apparatus sends the second request information.

In a possible implementation, after the bandwidth of the first bearer pipeline is adjusted, the fine-granularity client that uses the first bearer pipeline changes. The slot allocation manner indicates a correspondence between the changed fine-granularity client and a slot corresponding to the first bearer pipeline.

In a possible implementation, after the bandwidth of the first bearer pipeline is adjusted, a quantity of slots corresponding to a target fine-granularity client that uses the first bearer pipeline changes.

In a possible implementation, the first request information is further used to request the second communication apparatus to adjust the bandwidth of the first bearer pipeline.

In a possible implementation, the first request information indicates, via a target bit in an overhead OH field of the frame, to request the second communication apparatus to adjust the bandwidth of the first bearer pipeline.

In a possible implementation, before sending the first request information to the second communication apparatus, the sending module 1701 is further configured to send third request information to the second communication apparatus, where the third request information is used to request the second communication apparatus to adjust the bandwidth of the first bearer pipeline. The receiving module 1702 is further configured to receive third response information sent by the second communication apparatus, where the third response information indicates that the second communication apparatus supports adjustment of the bandwidth of the first bearer pipeline.

In a possible implementation, the apparatus further includes a processing module 1703.

The processing module 1703 is configured to generate a slot table of an OH plane, where the slot table of the OH plane indicates the slot corresponding to the first bearer pipeline and OH information that needs to be transmitted in the slot corresponding to the first bearer pipeline, and the OH information is information in the OH field of the frame.

The processing module 1703 is further configured to transfer the OH information to the data plane based on the slot table of the OH plane, to enable the data plane to send the first request information or the second request information in the slot corresponding to the first bearer pipeline.

In a possible implementation, the apparatus further includes a processing module 1703.

The processing module 1703 is configured to generate a secondary slot table of the data plane, where the secondary slot table of the data plane indicates distribution of slots corresponding to the fine-granularity client after the bandwidth of the first bearer pipeline is adjusted.

The processing module 1703 is further configured to switch the secondary slot table of the data plane to a primary slot table at the preset time point.

FIG. 18 is a diagram of a structure of a communication apparatus according to an embodiment of this application. In a possible example, the communication apparatus is a second communication apparatus in an fgMTN, and the communication apparatus includes: a receiving module 1801, configured to receive first request information sent by a first communication apparatus, where the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN; and a sending module 1802, configured to send first response information to the first communication apparatus, where the first response information indicates that the second communication apparatus supports the slot allocation manner. The receiving module 1801 is further configured to receive second request information sent by the first communication apparatus, where the second request information indicates that the second communication apparatus causes the slot allocation manner to take effect at a preset time point.

In a possible implementation, the first bearer pipeline is a data bearer pipeline in a dedicated network line of the fgMTN, the dedicated network line includes a plurality of data bearer pipelines, and the first bearer pipeline is used to bear service data of one or more fine-granularity clients.

In a possible implementation, the slot allocation manner specifically includes a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

In a possible implementation, the preset time point is a time point that is after the first communication apparatus sends the second request information and at which an fgOMFI corresponding to the first bearer pipeline is 0.

Alternatively, the preset time point is a start time point of a data plane slot after the first communication apparatus sends the second request information.

In a possible implementation, after the bandwidth of the first bearer pipeline is adjusted, the fine-granularity client that uses the first bearer pipeline changes. The slot allocation manner indicates a correspondence between the changed fine-granularity client and a slot corresponding to the first bearer pipeline.

In a possible implementation, after the bandwidth of the first bearer pipeline is adjusted, a quantity of slots corresponding to a target fine-granularity client that uses the first bearer pipeline changes.

In a possible implementation, the first request information is further used to request the second communication apparatus to adjust the bandwidth of the first bearer pipeline.

In a possible implementation, the first request information indicates, via a target bit in an OH field of the frame, to request the second communication apparatus to adjust the bandwidth of the first bearer pipeline.

In a possible implementation, before receiving the first request information sent by the first communication apparatus, the receiving module 1801 is further configured to receive third request information sent by the first communication apparatus, where the third request information is used to request the second communication apparatus to adjust the bandwidth of the first bearer pipeline. The sending module 1802 is further configured to send third response information to the first communication apparatus, where the third response information indicates that the second communication apparatus supports adjustment of the bandwidth of the first bearer pipeline.

FIG. 19 is a diagram of a structure of a network device according to an embodiment of this application. The communication apparatus in FIG. 17 or FIG. 18 is mounted on the network device, and the network device is implemented by using a general bus architecture.

The network device includes at least one processor 1901, a communication bus 1902, a memory 1903, and at least one communication interface 1904.

Optionally, the processor 1901 may be a general CPU, an NP, or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD is a complex programmable logic device (complex programmable logic device, CPLD), a field programmable gate array (field programmable gate array, FPGA), generic array logic (generic array logic, GAL), or any combination thereof.

The communication bus 1902 is configured to transfer information between the foregoing components. The communication bus 1902 is classified into an address bus, a data bus, a control bus, and the like. For ease of representation, only one thick line is used to represent the bus in the figure, but this does not mean that there is only one bus or only one type of bus.

Optionally, the memory 1903 is a read-only memory (read-only memory, ROM) or another type of static storage device that can store static information and instructions. Alternatively, the memory 1903 is a random access memory (random access memory, RAM) or another type of dynamic storage device that can store information and instructions. Alternatively, the memory 1903 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 1903 exists independently, and is connected to the processor 1901 through the communication bus 1902. Optionally, the memory 1903 is integrated with the processor 1901.

The communication interface 1904 is configured to communicate with another device or a communication network by using any apparatus like a transceiver. The communication interface 1904 includes a wired communication interface. Optionally, the communication interface 1904 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 1901 may include one or more CPUs, for example, a CPU 0 and a CPU 1 shown in FIG. 19.

During specific implementation, in an embodiment, the network device may include a plurality of processors, for example, the processor 1901 and a processor 1905 shown in FIG. 19. Each of the processors is a single-core processor (single-CPU) or a multi-core processor (multi-CPU). The processor herein is one or more devices, circuits, and/or processing cores configured to process data (for example, computer program instructions).

In some embodiments, the memory 1903 is configured to store program code 1919 for executing the solutions of this application, and the processor 1901 executes the program code 1919 stored in the memory 1903. In other words, the network device implements the foregoing method embodiments by using the processor 1901 and the program code 1919 in the memory 1903.

Embodiments in this specification are described in a progressive manner. For same or similar parts in embodiments, refer to each other. Each embodiment focuses on a difference from other embodiments. Referring to B for A means that A is the same as B or A is a simple variant of B.

In this specification and claims in embodiments of this application, the terms "first", "second", and the like are intended to distinguish between different objects, but are not intended to describe a particular order of the objects, and cannot be understood as an indication or implication of relative importance. For example, a first rate-limiting channel and a second rate-limiting channel are used to distinguish between different rate-limiting channels, but are not used to describe a particular order of the rate-limiting channels. It cannot be understood that the first rate-limiting channel is more important than the second rate-limiting channel.

In embodiments of this application, unless otherwise specified, "at least one" means one or more, and "a plurality of" means two or more.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the described procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

The foregoing embodiments are merely intended for describing the technical solutions of this application, but not for limiting this application. Although this application is described in detail based on the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of the technical solutions of embodiments of this application.

## Claims

1. A bandwidth adjustment method, applied to a first communication apparatus in a fine granularity metro transport network fgMTN, and comprising:
sending, by the first communication apparatus, first request information to a second communication apparatus, wherein the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN;
receiving, by the first communication apparatus, first response information sent by the second communication apparatus, wherein the first response information indicates that the second communication apparatus supports the slot allocation manner; and
sending, by the first communication apparatus, second request information to the second communication apparatus, wherein the second request information indicates that the second communication apparatus causes the slot allocation manner to take effect at a preset time point.

2. The method according to claim 1, wherein the first bearer pipeline is a data bearer pipeline in a dedicated network line of the fgMTN, the dedicated network line comprises a plurality of data bearer pipelines, and the first bearer pipeline is used to bear service data of one or more fine-granularity clients.

3. The method according to claim 1 or 2, wherein the slot allocation manner specifically comprises a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

4. The method according to claim 3, wherein the preset time point is a time point that is after the first communication apparatus sends the second request information and at which an fgOMFI corresponding to the first bearer pipeline is 0; or
the preset time point is a start time point of a data plane slot after the first communication apparatus sends the second request information.

5. The method according to any one of claims 1 to 4, wherein after the bandwidth of the first bearer pipeline is adjusted, the fine-granularity client that uses the first bearer pipeline changes; and
the slot allocation manner indicates a correspondence between the changed fine-granularity client and a slot corresponding to the first bearer pipeline.

6. The method according to any one of claims 1 to 5, wherein after the bandwidth of the first bearer pipeline is adjusted, a quantity of slots corresponding to a target fine-granularity client that uses the first bearer pipeline changes.

7. The method according to any one of claims 1 to 6, wherein the first request information is further used to request the second communication apparatus to adjust the bandwidth of the first bearer pipeline.

8. The method according to claim 7, wherein the first request information indicates, via a target bit in an overhead OH field of a frame, to request the second communication apparatus to adjust the bandwidth of the first bearer pipeline.

9. The method according to any one of claims 1 to 6, wherein before the first communication apparatus sends the first request information to the second communication apparatus, the method further comprises:
sending, by the first communication apparatus, third request information to the second communication apparatus, wherein the third request information is used to request the second communication apparatus to adjust the bandwidth of the first bearer pipeline; and
receiving, by the first communication apparatus, third response information sent by the second communication apparatus, wherein the third response information indicates that the second communication apparatus supports adjustment of the bandwidth of the first bearer pipeline.

10. The method according to any one of claims 1 to 9, wherein the method further comprises:
generating, by the first communication apparatus, a slot table of an OH plane, wherein the slot table of the OH plane indicates the slot corresponding to the first bearer pipeline and OH information that needs to be transmitted in the slot corresponding to the first bearer pipeline, and the OH information is information in the OH field of the frame; and
transferring, by the first communication apparatus, the OH information to a data plane based on the slot table of the OH plane, to enable the data plane to send the first request information or the second request information in the slot corresponding to the first bearer pipeline.

11. The method according to any one of claims 1 to 10, wherein the method further comprises:
generating, by the first communication apparatus, a secondary slot table of the data plane, wherein the secondary slot table of the data plane indicates distribution of slots corresponding to the fine-granularity client after the bandwidth of the first bearer pipeline is adjusted; and
switching, by the first communication apparatus, the secondary slot table of the data plane to a primary slot table at the preset time point.

12. A bandwidth adjustment method, applied to a second communication apparatus in an fgMTN, comprising:
receiving, by the second communication apparatus, first request information sent by a first communication apparatus, wherein the first request information indicates a slot allocation manner after a bandwidth of a first bearer pipeline is adjusted, the slot allocation manner indicates a correspondence between a fine-granularity client that uses the first bearer pipeline and a slot provided after the bandwidth of the first bearer pipeline is adjusted, and the first bearer pipeline is a data bearer pipeline in the fgMTN;
sending, by the second communication apparatus, first response information to the first communication apparatus, wherein the first response information indicates that the second communication apparatus supports the slot allocation manner; and
receiving, by the second communication apparatus, second request information sent by the first communication apparatus, wherein the second request information indicates that the second communication apparatus causes the slot allocation manner to take effect at a preset time point.

13. The method according to claim 12, wherein the first bearer pipeline is a data bearer pipeline in a dedicated network line of the fgMTN, the dedicated network line comprises a plurality of data bearer pipelines, and the first bearer pipeline is used to bear service data of one or more fine-granularity clients.

14. The method according to claim 12 or 13, wherein the slot allocation manner specifically comprises a correspondence between a fine-granularity overhead multi-frame indication fgOMFI and a fine-granularity client identifier, the fgOMFI indicates a sequence number of overhead information after the bandwidth of the first bearer pipeline is adjusted, and a total amount of overhead information in a period after the bandwidth of the first bearer pipeline is adjusted is related to an adjusted bandwidth value.

15. The method according to claim 14, wherein the preset time point is a time point that is after the first communication apparatus sends the second request information and at which an fgOMFI corresponding to the first bearer pipeline is 0; or
the preset time point is a start time point of a data plane slot after the first communication apparatus sends the second request information.

16. The method according to any one of claims 12 to 15, wherein after the bandwidth of the first bearer pipeline is adjusted, the fine-granularity client that uses the first bearer pipeline changes; and
the slot allocation manner indicates a correspondence between the changed fine-granularity client and a slot corresponding to the first bearer pipeline.

17. The method according to any one of claims 12 to 16, wherein after the bandwidth of the first bearer pipeline is adjusted, a quantity of slots corresponding to a target fine-granularity client that uses the first bearer pipeline changes.

18. The method according to any one of claims 12 to 17, wherein the first request information is further used to request the second communication apparatus to adjust the bandwidth of the first bearer pipeline.

19. The method according to claim 18, wherein the first request information indicates, via a target bit in an OH field of a frame, to request the second communication apparatus to adjust the bandwidth of the first bearer pipeline.

20. The method according to any one of claims 12 to 17, wherein before the second communication apparatus receives the first request information sent by the first communication apparatus, the method further comprises:
receiving, by the second communication apparatus, third request information sent by the first communication apparatus, wherein the third request information is used to request the second communication apparatus to adjust the bandwidth of the first bearer pipeline; and
sending, by the second communication apparatus, third response information to the first communication apparatus, wherein the third response information indicates that the second communication apparatus supports adjustment of the bandwidth of the first bearer pipeline.

21. A communication apparatus, wherein the apparatus is a first communication apparatus in an fgMTN, the apparatus comprises a plurality of functional modules, and the plurality of functional modules interact with each other to implement the method according to any one of claims 1 to 11.

22. A communication apparatus, wherein the apparatus is a second communication apparatus in an fgMTN, the apparatus comprises a plurality of functional modules, and the plurality of functional modules interact with each other to implement the method according to any one of claims 12 to 20.

23. A network device, comprising a processor and a memory, wherein the memory is configured to store program code, and the processor is configured to invoke the program code in the memory, to enable the network device to perform the method according to any one of claims 1 to 20.

24. A computer-readable storage medium, storing instructions, wherein when the instructions are run on a computer, the computer is enabled to perform the method according to any one of claims 1 to 20.

25. A computer program product, comprising program code, wherein when a computer runs the computer program product, the computer is enabled to perform the method according to any one of claims 1 to 20.
